# EUROPEAN PATENT APPLICATION

(11) **EP 1 879 401 A1**
(43) Date of publication of application: **16.01.2008**
(21) Application number: 06745964.4
(22) Date of filing: 01.05.2006
(51) Int. Cl.: H04N 7/30

(54) **DYNAMIC IMAGE ENCODING METHOD, DYNAMIC IMAGE DECODING METHOD, AND DEVICE THEREOF**

(30) Priority: 03.05.2005 EP 05009718; 27.09.2005 EP 05021038; 27.09.2005 EP 05021074
(71) Applicant: MATSUSHITA ELECTRIC INDUSTRIAL CO., LTD., Osaka 571-8501 (JP)
(72) Inventor: SCHUUR, Bernhard, 63225 Langen (DE); WEDI, Thomas, 63225 Langen (DE); KONDO, Satoshi, Osaka 540-6207 (JP)
(74) Representative: Grünecker, Kinkeldey, Stockmair & Schwanhäusser Anwaltssozietät
(86) International application number: PCT/JP2006/309113
(87) International publication number: WO 2006/118288

(57) **Abstract**

The moving picture encoding method of the present invention is for orthogonally transforming pixels which constitute a block into coefficients indicating frequencies, quantizing the coefficients, and encoding the quantized coefficients. The method includes: selecting quantized coefficients belonging to a subset of a block, from the block of frequency coefficients which are either the coefficients prior to quantization or the quantized coefficients; and altering the arrangement of the subset in the block. Here, the arrangement of the subset is altered in relation to at least one of the following (i) to (v): (i) the completion of encoding a picture; (ii) the completion of encoding a predetermined number of blocks; (iii) content of a current picture to be encoded; (iv) the position of a block in a picture; and (v) a comparison between each frequency coefficient and a threshold.

## Description

### Technical Field

The present invention relates to encoding in which data of a moving picture is compressed, and in particular, to a moving picture encoding method and a moving picture decoding method for realizing a high encoding efficiency and apparatuses using the methods.

### Background Art

Moving picture data has been adopted in an increasing number of applications, ranging from video-telephoning and video-conferencing to DVD and digital television. When moving picture data is transmitted or recorded, a substantial amount of data has to be sent through conventional transmission channels having limited available frequency bandwidth or has to be stored on conventional storage media having limited data capacity. In order to transmit and store digital data on conventional channels and media, it is inevitable to compress or reduce the volume of digital data.

As for the compression of moving picture data, plural moving picture encoding standards have been developed. Such video standards are, for instance, ITU-T standards denoted with H.26x and ISO/IEC standards denoted with MPEG-x. The most up-to-date and advanced moving picture encoding standard is the standard denoted as H.264/MPEG-4 AVC standard (Non-patent reference 1).

The encoding approach underlying most of these standards includes the following main stages:
(a) Dividing each individual frame in a video into blocks of pixels in order to subject each frame to data compression at a block level.
(b) Transforming the respective blocks of the moving picture data from the blocks in a spatial domain to blocks in a frequency domain.
(c) Reducing the amount of the whole data by quantizing transform coefficients in the frequency domain.
(d) Entropy encoding the quantized transform coefficients.
(e) Exploiting temporal dependencies between blocks of consecutive frames in order to encode only changes between the consecutive frames. For this, motion estimation and compensation techniques are employed.

It is a particular approach of current moving picture encoding standards that the image information is transformed from the spatial domain into the frequency domain. Compression of image information can be realized by representing the content of the image as very few frequency components. A natural image content is mostly concentrated in the coefficients of the lower frequency domain. High-frequency parts for which the human eye is less sensitive can be removed or reduced in order to lower the amount of coded data.

In the current video encoding standards like MPEG-1, MPEG-2, MPEG-4, H.263 and H.264/AVC, entropy encoding is used in order to further compress the quantized frequency coefficients.

This entropy encoding includes processing of scanning two-dimensional blocks of quantized transform coefficients in order to convert them to a one-dimensional sequence. Usually predetermined scanning such as the zigzag scanning is applied. This scanning starts at the lowest frequency coefficient; that is, the DC-coefficient and is aborted as soon as all non-zero coefficients of the blocks are scanned. One disadvantage of such scanning is that a lot of zero coefficients must be scanned before the last non-zero coefficient is reached.

The one-dimensional sequence of the quantized transform coefficients obtained in this way is compressed to a series of pairs called run-levels. Each of the run-level pairs is coded into a variable-length code, based on, for example, the Huffman coding. The variable-length codes are optimized to assign shorter code words to the run-level pairs which are most frequently occur in typical video images. In this way, the entire blocks of quantized transform coefficients are encoded.

In many applications, the volume or bandwidth available for storing or transmitting encoded moving picture data is seriously restricted. There is thus the urgent need to compress the video data as much as possible. However, increasing data compression rate by reducing the amount of data by quantizing even more coarsely, inevitably leads to a deterioration in picture quality.
Non-patent Reference 1: ITU-T Rec. H264|ISO/IEC 14496-10 version 1 "Information technology - Coding of audio-visual objects - Part 10: Advanced video coding"

### Disclosure of Invention

### Problems that Invention is to Solve

The present invention has an object to provide a moving picture encoding method and moving picture decoding method for realizing a high data compression rate without deteriorating picture quality, and apparatuses using the methods.

### Means to Solve the Problems

In order to achieve the above object, the moving picture encoding method of the present invention is intended for orthogonally transforming pixels which constitute a block into coefficients indicating frequencies, quantizing the coefficients, and encoding the quantized coefficients. The method includes: selecting quantized coefficients belonging to a subset of a block, from the block of frequency coefficients which are either the coefficients prior to quantization or the quantized coefficients; and altering the arrangement of the subset in the block. With this structure, first, it is possible to achieve a high data compression rate by selecting quantized coefficients belonging to a subset and encoding the selected quantized coefficients into variable-length codes. Second, altering the arrangement of the subset in the block makes it possible to prevent a deterioration in picture quality due to the quantized coefficients which have not been selected. If the same subset is retained throughout several tens of frames, the deterioration in picture quality due to the not-selected quantized coefficients are clearly recognized by human eyes. In the present invention, the frequency components other than the subset are lost in, for example, each frame, but frequency components to be lost vary as time elapses in consecutive frames because the arrangement of the subset is altered. Accordingly, human eyes do not catch the losses of the respective frequency components because of a time integral effect of afterimages in consecutive frames, and thus human eyes do not recognize a deterioration in picture quality.

Here, the arrangement of the subset may be altered in relation to at least one of the following (i) to (v): (i) the completion of encoding a picture; (ii) the completion of encoding a predetermined number of blocks; (iii) content of a current picture to be encoded; (iv) the position of a block in a picture; and (v) a comparison between each frequency coefficient and a threshold. With the structure, it is possible to regularly simplify the alterations of subsets, or properly perform the alterations according to the image content.

Here, the moving picture encoding method may include suppressing, to zeros, coefficients which do not belong to the subset. In the encoding, the selected frequency coefficients and the frequency coefficients which have been suppressed to zeros may be encoded into variable-length codes. With this structure, it is possible to reproduce a moving picture in a conventional decoding apparatus because the selected quantized coefficients and the quantized coefficients which have been suppressed to zeros are encoded, and thus the decoding apparatus is not required to find out the position of the subset.

Here, in the encoding, frequency coefficients which have not been selected may be excluded from variable-length encoding.
With this structure, only the selected quantized coefficients are encoded into variable-length codes. This enables the achievement of a data compression rate which is higher than the one obtained in the case where the quantized coefficients suppressed to zeros are encoded. Furthermore, human eyes do not catch the deterioration in picture quality.

Here, in the selecting, the frequency coefficients belonging to the subset may be sequentially scanned, and in the encoding, the scanned frequency coefficients may be encoded into variable-length codes.

Here, in the selecting, the frequency coefficients belonging to the subset may be rearranged in a scanning order, and the rearranged frequency coefficients belonging to the subset may be sequentially scanned. With this structure, rearrangement of the subset eliminates the necessity of skipping the transform coefficients which are not included in the subset. This facilitates scanning.

Here, the moving picture encoding method may include embedding arrangement data for identifying the arrangement of the subset in the block, into a quantization matrix. In the encoding, the quantization matrix in which the arrangement data is embedded may be encoded. With this structure, arrangement data is embedded in a quantization matrix. This makes it possible to notify the decoding apparatus of the arrangement of the subset without increasing the amount of data (without decreasing the data compression rate).

Here, the moving picture encoding method may include generating the arrangement data for identifying the arrangement of the subset. In the encoding, the arrangement data may be encoded.

Here, the arrangement data may include an identifier for identifying a segment corresponding to the subset among the segments which constitute the block.

Here, the arrangement data may be bitmap data indicating whether each frequency coefficient in the block belongs to the subset.

The above explanation can be applied to a moving picture decoding method, a moving picture encoding apparatus, a moving picture decoding apparatus, a semiconductor apparatus, and a program.

### Effects of the Invention

The present invention enables the realization of a high data compression rate and the prevention of deterioration in picture quality.

### Brief Description of Drawings

FIG. 1 is a block diagram showing the structure of a moving picture encoding apparatus in a first embodiment.
FIG. 2 is a block diagram showing the structure of a moving picture encoding apparatus.
FIG. 3 is a diagram showing a frame divided into blocks.
FIG. 4A is a diagram showing an example of coefficient blocks prior to quantization.
FIG. 4B is a diagram showing an example of quantized coefficient blocks.
FIG. 5 is an illustration showing a suppression state by a suppression unit.
FIG. 6A is a diagram showing examples of alterations to a subset.
FIG. 6B is a diagram showing examples of alterations to a subset.
FIG. 7 is a flowchart indicating operations of the moving picture encoding apparatus.
FIG. 8 is a block diagram showing the structure of a moving picture encoding apparatus in a second embodiment.
FIG. 9 is a block diagram showing the structure of a moving picture encoding apparatus.
FIG. 10 is an illustration showing scanning of quantized coefficients.
FIG. 11 is an illustration showing a rearrangement of the quantized coefficients.
FIG. 12A is a diagram showing an example of a quantization matrix to which arrangement data has not yet been embedded.
FIG. 12B is a diagram showing an example of a quantization matrix to which arrangement data has been embedded.
FIG. 13 is a flowchart indicating operations of the moving picture encoding apparatus.
FIG. 14 is an illustration showing signaling between the moving picture encoding apparatus and the moving picture decoding apparatus.
FIG. 15 is a flowchart indicating operations of the moving picture decoding apparatus.
FIG. 16 is a block diagram showing the structure of a moving picture encoding apparatus in a third embodiment.
FIG. 17 is a block diagram showing the structure of a moving picture decoding apparatus.
FIG. 18 is a flowchart indicating operations of the moving picture encoding apparatus.
FIG. 19 is an illustration showing signaling between the moving picture encoding apparatus and the moving picture decoding apparatus.
FIG. 20 is an illustration representing arrangement data as segment numbers.
FIG. 21A is an illustration representing arrangement data as bitmap data.
FIG. 21B is an illustration representing arrangement data as bitmap data.
FIG. 22 is a flowchart indicating operations of the moving picture decoding apparatus.
FIG. 23A is a diagram showing an example of the physical format of a flexible disc which is the body of a recording medium.
FIG. 23B is a diagram showing the external front view, the sectional structure and the body of the flexible disc.
FIG. 23C is the structure for performing recording and reproducing the program onto and from the flexible disc FD.
FIG. 24 is a block diagram showing the whole configuration of a content supply system.
FIG. 25 is a diagram showing an example of a mobile phone in which the moving picture encoding method and the moving picture decoding method are used.
FIG. 26 is a block diagram of the mobile phone.
FIG. 27 is a diagram showing an example of a system for digital broadcasting.

### Numerical References

- 100 to 102: Moving picture encoding apparatus
- 110: Subtractor
- 120: Transform and quantization unit
- 130: Inverse quantization and inverse transform unit
- 135: Adder
- 137: Deblocking filter
- 140: Memory
- 150: intra prediction unit
- 160: Motion compensation prediction unit
- 170: Motion estimation unit
- 180: Switch
- 190, 191: Entropy encoding unit
- 300, 301,303: Suppression unit
- 302: Embedding unit
- 304: Arrangement data generation unit
- 200 to 202: Moving picture decoding apparatus
- 210: Entropy decoding unit
- 220: Inverse quantization and inverse transform unit
- 230: Adder
- 240: Deblocking filter
- 250: Memory
- 260: Intra prediction unit
- 270: Motion compensation prediction unit
- 280: Switch
- 310: Segment
- 800: Quantization matrix
- 810: Low-frequency segment
- 820: Low-frequency segment
- 801: Zero insertion unit
- 902: Arrangement data extraction unit
- 903: Arrangement data decoding unit
- f1 to f4: frames

### Best Mode for Carrying Out the Invention

### (First Embodiment)

A moving picture encoding apparatus and a moving picture encoding method in this embodiment are intended for: orthogonally transforming pixels which constitute a block into plural coefficients; quantizing the coefficients; selecting the quantized coefficients belonging to a subset from among all the quantized coefficients; encoding the selected quantized coefficients into variable-length codes; and altering the arrangement of a subset in a block. The moving picture encoding apparatus and a moving picture encoding method in the present invention are further intended for: suppressing the quantized coefficients which do not belong to the subset; and encoding the quantized coefficients including the selected quantized coefficients and the suppressed quantized coefficients into variable-length codes.

Here, the quantized coefficients belonging to the subset are selected and the selected quantized coefficients are encoded into variable-length codes for the purpose of achieving a high data compression rate. In addition, the arrangement of the subset in the block is altered in order to prevent a deterioration in picture quality due to losses of the quantized coefficients which have not been selected. This makes it possible to achieve a high data compression rate and furthermore prevent a deterioration in picture quality.

The moving picture encoding apparatus in this embodiment will be described in detail with reference to the drawings.

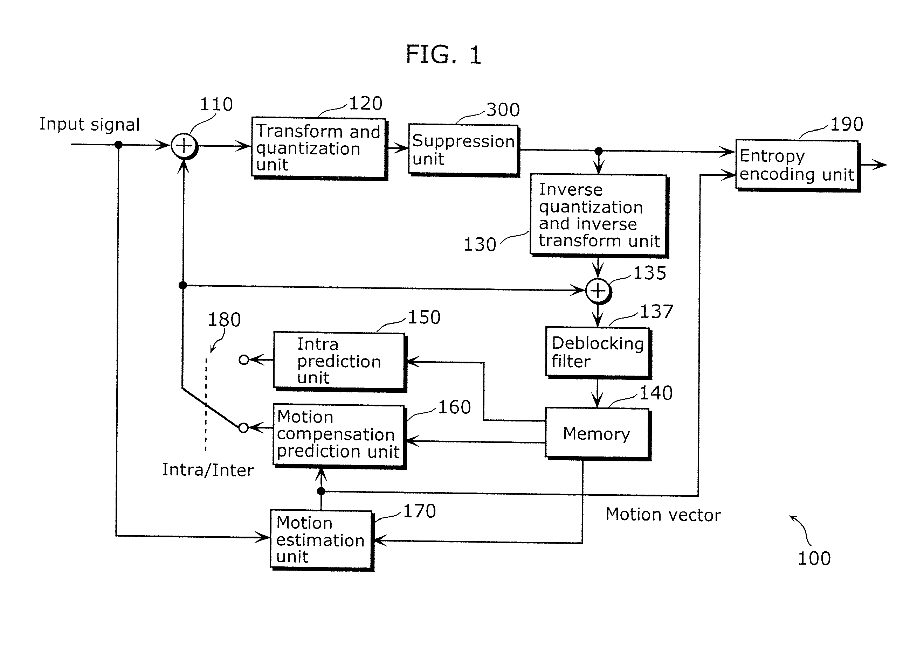

FIG. 1 is a block diagram showing the structure of the moving picture encoding apparatus in the first embodiment. In the figure, the moving picture encoding apparatus 100 includes: a subtractor 110, a transform and quantization unit 120, a suppression unit 300, an inverse quantization and inverse transform unit 130, an adder 135, a deblocking filter 137, a memory 140, an intra prediction unit 150, a motion compensation prediction unit 160, a motion estimation unit 170, a switch 180, and an entropy encoding unit 190.

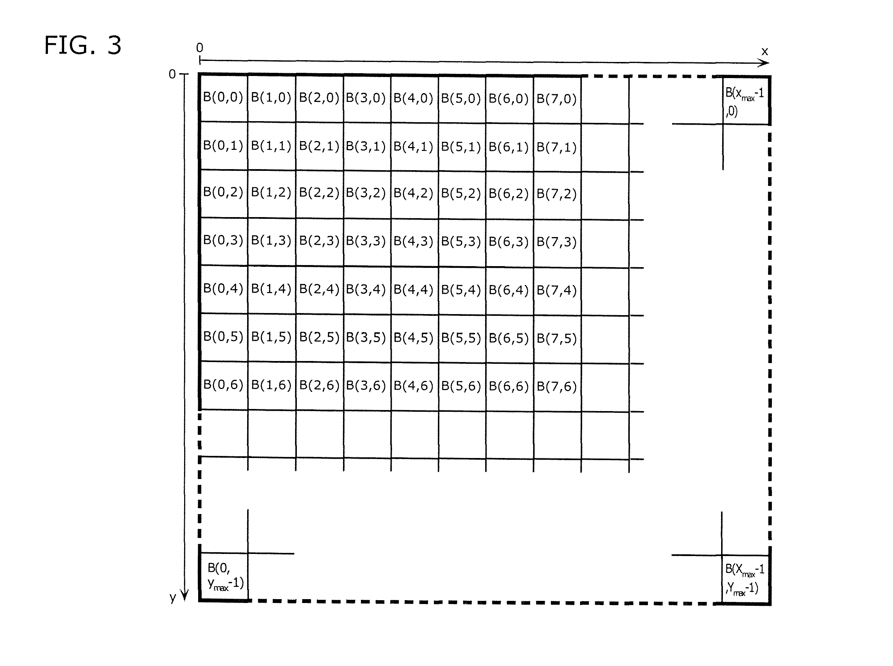

The adder 110 calculates a prediction residual which is a difference between the block and a predictive picture for each block which constitutes a current picture contained in a moving picture (input signal) to be coded. Here, the predictive picture is inputted into the subtractor 110 through the intra prediction unit 150 or the motion compensation prediction unit 160. The block is obtained by dividing a single picture (refer to FIG. 3). The size of the block is N x M pixels. In general, N is 4, 8 or 16. This applies to M. The following processing is performed basically on a block-by-block basis.

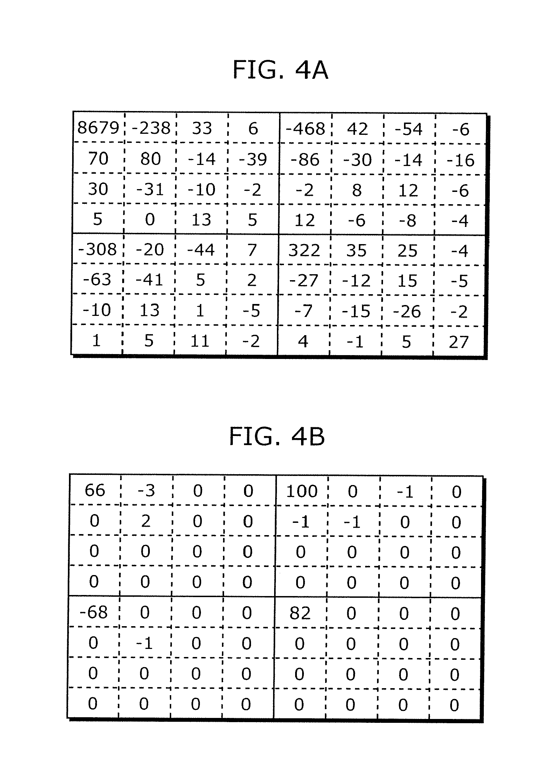

The transform and quantization unit 120 orthogonally transforms the predictive residual from the subtractor 110, and further quantizes it. In the orthogonal transform, a predictive residual block is transformed into coefficient blocks composed of plural coefficients representing frequencies (refer to FIG. 4A). FIG. 4A shows an example of four adjacent 4 x 4 coefficient blocks. In quantization, each of the coefficients in a coefficient block is calculated by division where quantization parameters and each of elements of a quantization matrix are used. In this way, quantized coefficient blocks are obtained (refer to FIG. 4B). As shown in FIG. 4B, the quantized coefficient block includes non-zero quantized coefficients and many zero quantized coefficients.

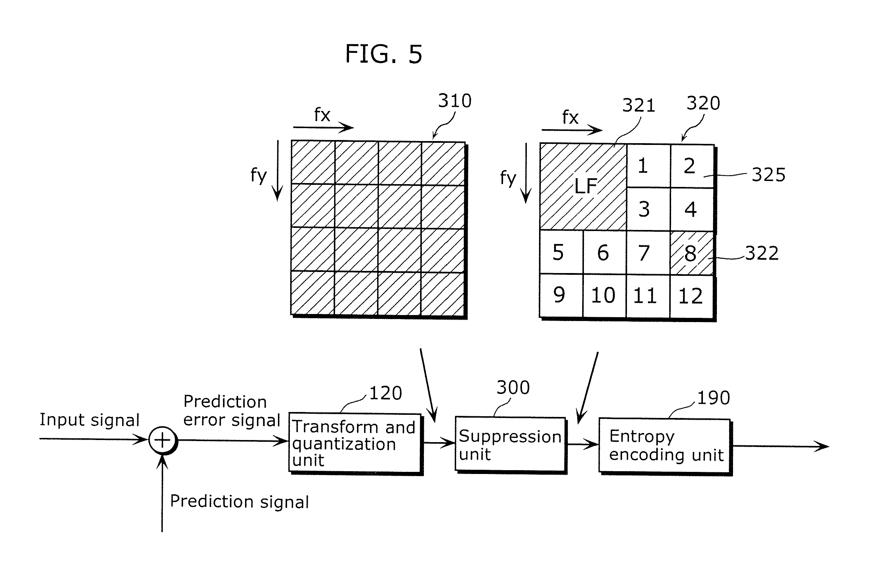

The suppression unit 300 selects quantized coefficients belonging to a subset (refer to FIG. 5) from among the quantized coefficient blocks composed of plural quantized coefficients, and further suppresses, to zero, the quantized coefficients which do not belong to the subset. This subset is altered, for example, on a picture-by-picture basis. This alteration varies, on a picture-by-picture basis, and thus lost frequency components corresponding to the suppressed quantized coefficients are not recognized by human eyes. Consequently, it is possible to prevent a deterioration in picture quality.

The inverse quantization and inverse transform unit 130, the adder 135, and the deblocking filter 137 decode locally (that is, inside the moving picture encoding unit 100) the suppressed quantized coefficient blocks which are outputted from the suppression unit 300.

The memory 140 stores the pixel blocks which have been locally decoded. Through this, a reference picture can be reconstructed.

The intra prediction unit 150 generates a predictive picture as an intra (I)-picture.

The motion compensation prediction unit 160 generates a predictive picture for an inter (P or B) according to a motion vector from the motion estimation unit 170.

The motion estimation unit 170 estimates a motion in a current block to be encoded with respect to the reference picture, and outputs the motion vector.

The switch 180 is for selectively outputting, to the subtractor 110, a predictive picture from the intra prediction unit 150 or a predictive picture from the motion compensation prediction unit 160.

The entropy encoding unit 190 encodes the suppressed quantized coefficient block which is outputted from the suppression unit 300 into a variable-length code. The suppressed quantized coefficient block includes the selected quantized coefficients (quantized coefficients within a subset) and the quantized coefficients which are suppressed to zeros outside the subset. In variable-length encoding: the quantized coefficients in the suppressed quantized coefficient block are scanned (for example, subjected to zigzag scanning) so as to be transformed into a sequence of one-dimensional quantized coefficients; and further, pairs (zero-run-length, level) are sequentially extracted from the sequence of quantized coefficients. The extracted pair of zero-run-length and level is encoded so as to form a single variable-length code. Thus, the suppressed quantized coefficient block includes many zeros. Therefore, the number of (zero-run-length, level) pairs becomes few, and the number of variable-length codes also becomes few. In this way, the amount of encoding variable-length codes can be reduced.

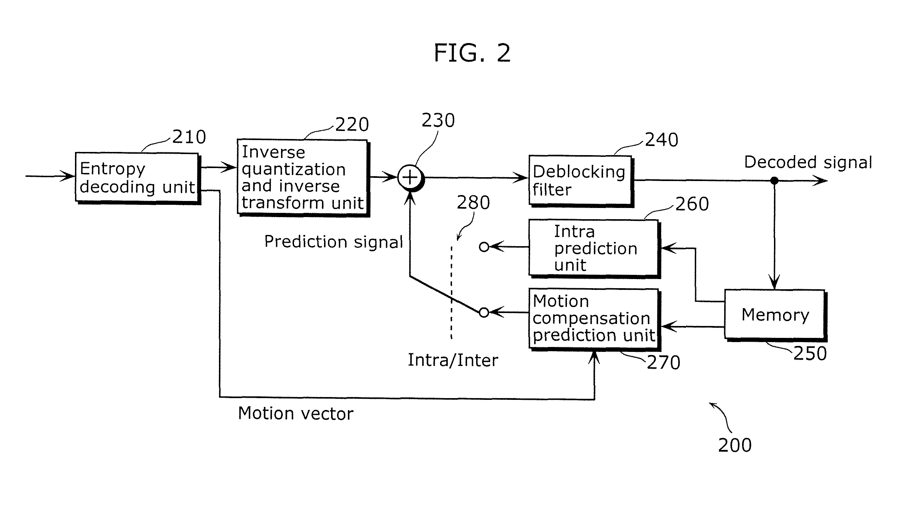

FIG. 2 is a block diagram showing the structure of the moving picture decoding apparatus. In the figure, the moving picture decoding apparatus 200 includes: an entropy decoding unit 210, an inverse quantization and inverse transform unit 220, an adder 230, a deblocking filter 240, a memory 250, an intra prediction unit 260, and a motion compensation prediction unit 270. This moving picture encoding apparatus 200 may be the moving picture decoding apparatus in the conventional art because there is no reduction in the number of the quantized transform coefficients, within a block, which are obtained from a coded stream to be transmitted from the moving picture encoding apparatus 100.

The moving picture encoding apparatus 200 will be briefly described. The entropy decoding unit 210 performs variable-decoding of an encoded stream (bitstream) from the moving picture encoding apparatus 100. This makes it possible to obtain quantized transform coefficient blocks, motion vectors and the like. The quantized transform coefficient blocks are transmitted to the inverse quantization and inverse transform unit 220, and the motion vectors are transmitted to the motion compensation prediction unit 270. The inverse quantization and inverse transform unit 220 performs an inverse quantization and an inverse orthogonal transform on the quantized coefficient blocks. Through this, prediction residual blocks are obtained. The prediction residual blocks are added to a predictive picture from the motion compensation prediction unit 270 in an inter prediction mode, and in an intra prediction mode, added to a predictive picture from the intra prediction unit 260. Through this, pixel blocks are reconstructed. These pixel blocks are subjected to a filtering by the deblocking filter 240, and then stored in the memory 250 as a part of a reference picture.

FIG. 5 is an illustration showing selection and suppression state by the suppression unit 300. The figure shows elements before and after the suppression unit 300, a quantized transform coefficient block which is inputted into the suppression unit 300, and the suppressed quantized transform coefficient block which is outputted from the suppression unit 300.

The quantized transform coefficient block to be inputted into the suppression unit 300 made up of 4 × 4 segments. Here, a segment is made up of a single quantized coefficient or plural (for example, 4 × 4) quantized coefficients. The quantized transform coefficient in the upper left of a quantized transform coefficient block is the quantized transform coefficient with the lowest frequency (direct current component). Frequencies fx in the horizontal direction become higher toward the right of the quantized transform coefficient block. In contrast, frequencies fy in the horizontal direction become higher toward the bottom of the quantized transform coefficient block.

The quantized transform coefficient block which is outputted from the suppression unit 300 is shown separately as the hatched subset and the segments other than the hatched subset. This subset includes a low-frequency segment LF and a high-frequency segment 8. In the figure, 1 to 12 represent the segment numbers assigned to the respective segments.

Human eyes are sensitive to a change in low-frequency components, but insensitive to a change in high-frequency components. Hence, the segment LF is desirably included in the subset. Further, in altering a subset, it is desirable to change only a high-frequency segment, retaining the segment LF as a must.

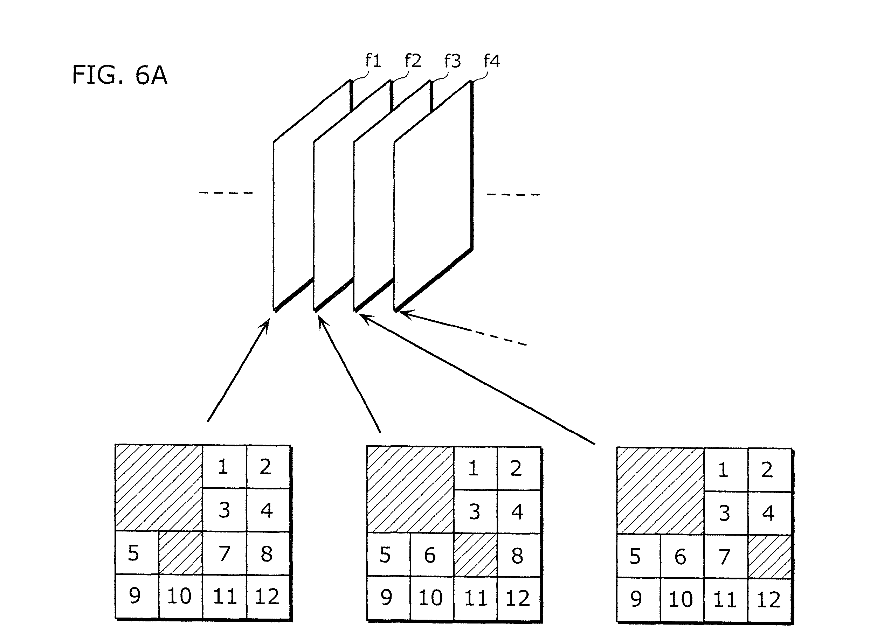

FIG. 6A shows an example of altering a subset. The figure shows an example of altering the subset on a picture-by-picture basis. The subset of the picture f1 is composed of the segment LF and a segment 6 (represented as "LF+6"). The subset of the picture f2 is "LF+7", and the subset of the picture f3 is "LF+8".

In this way, in the example of FIG. 6A, the subset is "LF +N". The N is, for example, incremented by 1 each time encoding of a picture is completed. Note that, N=12 returns to N=1. This makes it possible to alter the subset effectively on a picture-by-picture basis by using such an extremely simple rule. Note that how to assign the segment numbers is not limited to the way in FIG. 6A, and it can be based on a predetermined frequency order. For example, high-frequencies in the horizontal direction and high-frequencies in the vertical direction may be arranged alternately or at random.

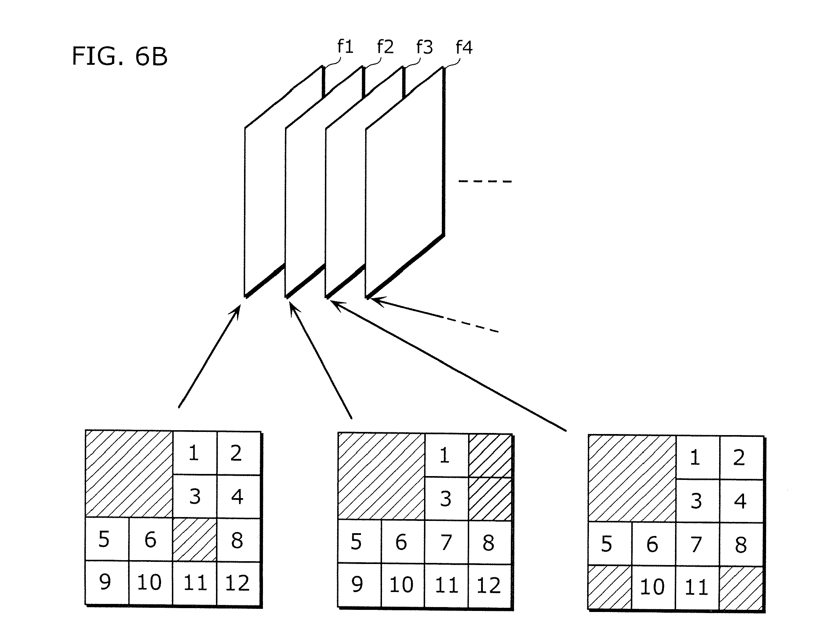

FIG. 6B is a diagram showing other variations of subsets. In each of these variations, each segment other than the segment LF within the subset are selected from among the segments having an average of values of the quantization coefficients which is equal to or greater than a threshold. The subset of the picture f1 is (LF + 7). In this case, the average of the quantization coefficients in the segment 7 is equal to or greater than the threshold. The subset of the picture f2 is (LF + 2 + 4). In this case, the average of the quantization coefficients in the segment 2 is equal to or greater than the threshold, and the average of the quantization coefficients of the segment 4 is equal to or greater than the threshold. The subset of the picture f3 is (LF + 9 + 12). In this case, the average of the quantization coefficients in the segment 9 is equal to or greater than the threshold, and the average of the quantization coefficients of the segment 2 is equal to or greater than the threshold.

In this variation, since the average of the quantization coefficients of high-frequency segments in the subset is equal to or greater than the threshold, those segments that have great influence on the image are to be positively included in the subset. This makes it possible to reduce deterioration in picture quality. A subset may be adaptively determined depending on the image content of a picture in this way.

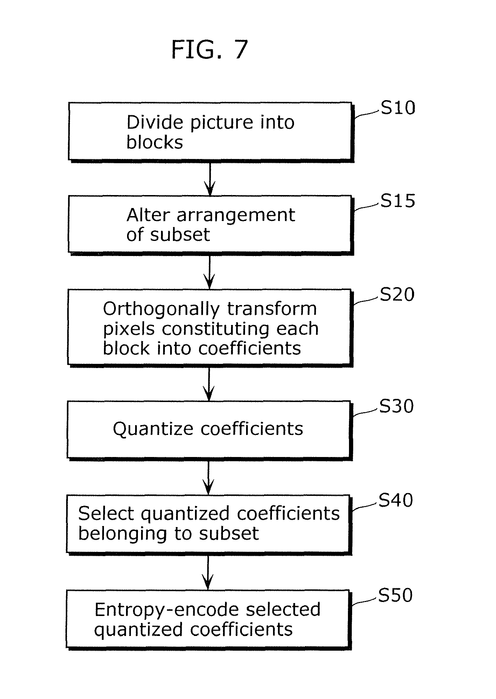

FIG. 7 is a flowchart indicating operations of the moving picture encoding apparatus 100. As shown in the figure, the moving picture encoding apparatus 100 divides a current picture to be encoded into plural blocks (Step S10), and sets or alters the arrangement of a subset (S15). Further, the following processing is performed on a block-by-block basis. The transform and quantization unit 120 transforms the predictive error block into a transform coefficient block (Step S20), and further quantizes it (Step S30).

Further, the suppression unit 300 selects the quantized transform coefficients belonging to the subset from among the quantized transform coefficient block, and suppresses, to zeros, the quantized transform coefficients which do not belong to the subset (Step S40). The entropy encoding unit 190 encodes the selected quantized transform coefficients and the quantized transform coefficient which are suppressed to zeros into variable-length codes (Step S50).

As described above, the moving picture encoding apparatus in this embodiment selects quantized coefficients belonging to the subset, and encodes the selected quantized coefficients into variable-length codes. Thus, a high data compression rate can be achieved. In addition, the moving picture encoding apparatus alters the arrangement of the subset in a block, for example, on a picture-by-picture basis or on a block-by-block basis. Thus, it is possible to prevent a deterioration in picture quality due to losses of the quantized coefficients which have not been selected. This makes it possible to achieve a high data compression rate and prevent a deterioration in picture quality.

Note that the position of such subset is not necessarily determined on a per block basis, and the predetermined number of predetermined frequency components may be determined to be a subset on a per picture basis. Also in this way, a trade-off between a high compression rate to be achieved and a deterioration in picture quality can be properly set using a simple method.

In addition, the segments within a subset may be altered according to a predetermined frequency order. By properly selecting the specific frequency order in this way, it is possible to control deterioration in picture quality of a picture to be obtained at minimum.

In addition, the position of a subset may be altered on a picture-by-picture basis or on a basis of image area within a picture. For example, it may be altered according to the position of a block in a picture. In this way, it is possible to dynamically alter the position of a subset using such a simple method.

In addition, the position of the subset may be altered according to a predetermined frequency sequence. Thus, it is possible to alter frequency using such a simple method.

In addition, all frequencies may be included in the positions of a predetermined number of subsets which are sequentially altered. By doing so, all the frequencies contribute to the picture quality at least once within a certain period of time. In addition, important frequency components may be included in the positions of a predetermined number of subsets which are sequentially altered.

In addition, the positions of the subsets may be adaptively determined according to the content of the moving picture (the content include movie, news, baseball, football, drama, animation, music program, game, commercial message).

In addition, in this embodiment, a description has been given of the method where quantized coefficients are suppressed in the suppression unit 300 after frequency transform and quantization processing are performed in the transform and quantization unit 120. However, frequency transform coefficients after the frequency transform may be suppressed and then subjected to quantization processing. The same effect as the one in this embodiment can also be obtained.

In addition, in this embodiment, a description has been given of the case where a frame (picture) is divided into blocks, and processing of frequency transform, quantization, suppression, entropy encoding are performed on a block-by-block basis. However, encoding may be performed on a block-by-block basis, without dividing a frame (picture) and regarding the frame (picture) as a block. The same effect as the one in this embodiment can be obtained.

In addition, in this embodiment, a description has been given of a method where quantized coefficients are forcibly suppressed in the suppression unit 300. However, it is possible to obtain substantially the same effect by manipulating a quantization matrix used in the quantization processing performed by the transform and quantization unit 120. More specifically, the quantization matrix values for the frequency components desired to be suppressed may be great values (for example, the maximum values which may be taken as the quantization matrix values). In this way, the quantization coefficients are not always suppressed to zeros, the effect is slightly smaller than that of this embodiment. However, the absolute values of the quantized coefficients are values near zeros, and thus approximately the same effect as that of this embodiment can be obtained. In this case, the processing in the suppression unit 300 is unnecessary.

### (Second Embodiment)

In the first embodiment, a description has been given of a moving picture encoding apparatus which selects quantized coefficients within a subset, and suppresses, to zeros, the quantized coefficients outside the subset. In contrast, in this embodiment, a description is given of a moving picture encoding apparatus which excludes the quantization coefficients outside the subset from variable-length encoding, and encodes only the quantization coefficients within the subset into variable-length codes. In this case, the moving picture decoding apparatus is required to determine the position of the subset in order to perform decoding. Thus, in this embodiment, a description is given of the configuration where the moving picture encoding apparatus notifies the moving picture decoding apparatus of the position of the subset within the block.

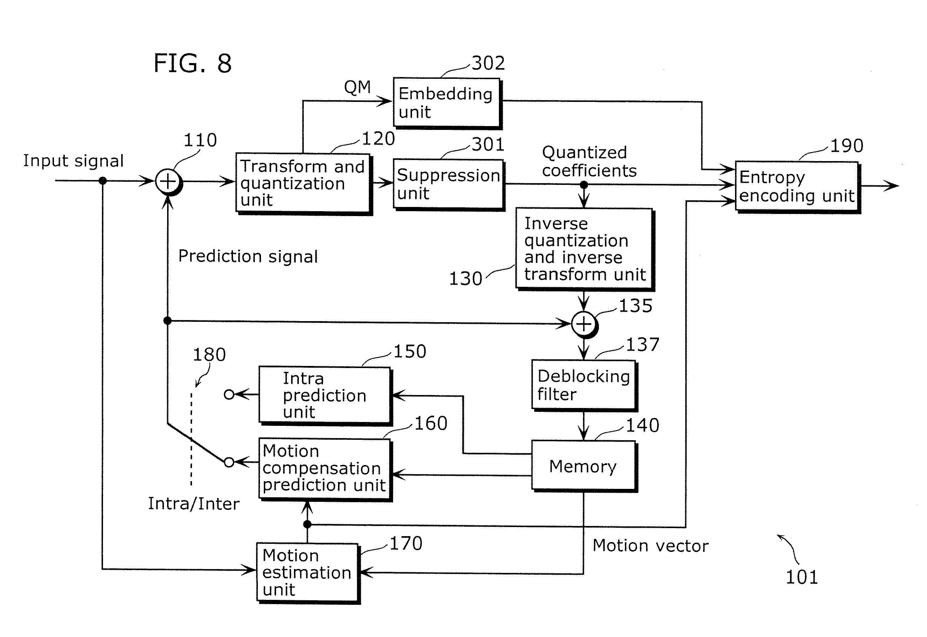

FIG. 8 is a block diagram showing the structure of the moving picture encoding apparatus 101 of a second embodiment. The structure of the moving picture encoding apparatus 101 in the figure differs from the one in FIG. 1 in that it has a suppression unit 301 and an embedding unit 302 instead of the suppression unit 300. Since the same structural elements are assigned the same reference numerals, descriptions thereof are omitted and only the different points are mainly described.

The suppression unit 301 selects the quantized coefficients belonging to a subset from a quantized coefficient block obtained from the transform and quantization unit 120. More specifically, the suppression unit 301 sequentially scans plural quantized coefficients within the quantized coefficient block. The suppression unit 301 outputs, to an entropy encoding unit 190, the quantized coefficients belong to the subset among the scanned quantized coefficients, but do not output the quantized coefficients which do not belong to the subset among the scanned quantized coefficients. Consequently, the entropy encoding unit 190 excludes the quantized coefficients outside the subset from the variable-length encoding, and encodes only the quantized coefficients within the subset into variable-length codes.

The embedding unit 302 embeds arrangement data for identifying the arrangement of a subset in a block in a quantization matrix. The quantization matrix with the embedded arrangement data is encoded by the entropy encoding unit 190, and transmitted to the moving picture decoding apparatus. The moving picture decoding apparatus is capable of determining the position of the subset by extracting the arrangement data from the quantization matrix.

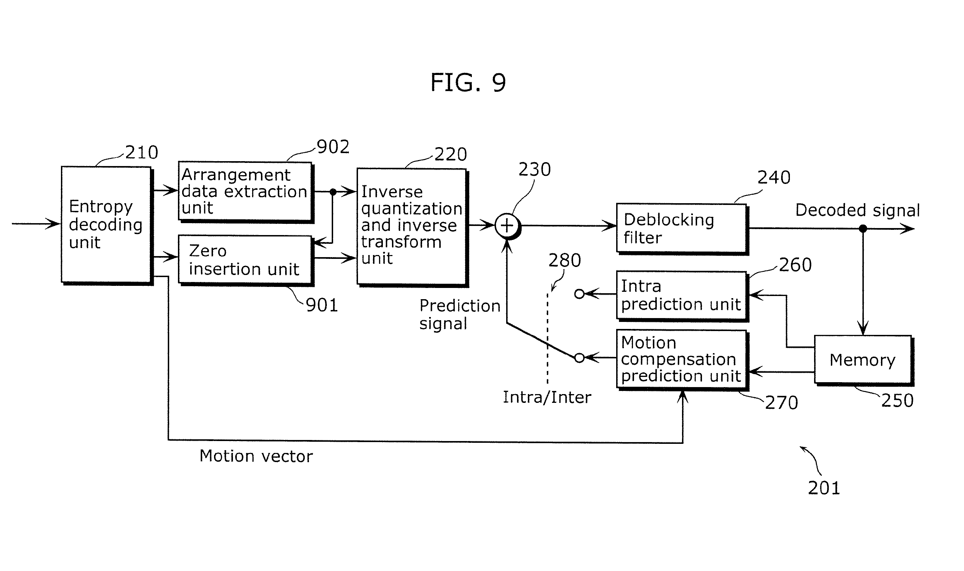

FIG. 9 is a block diagram showing the structure of the moving picture decoding apparatus 210. The structure of the moving picture decoding apparatus 210 in the figure differs from the one in FIG. 2 in that it additionally has an arrangement data extraction unit 902 and a zero insertion unit 901. Since the same structural elements are assigned the same reference numerals, descriptions thereof are omitted and only the different points are mainly described.

The arrangement data extraction unit 902 extracts arrangement data from the quantization matrix decoded by the entropy decoding unit 210.

The zero insertion unit 901 determines the arrangement of a subset within a block according to the arrangement data from the arrangement data extraction unit 902, arranges the decoded quantized coefficients from the entropy decoding unit 210 at the position of the subset in the block, and arranges predetermined values (zeros) as the quantized coefficients at the positions other than the subset in the block.

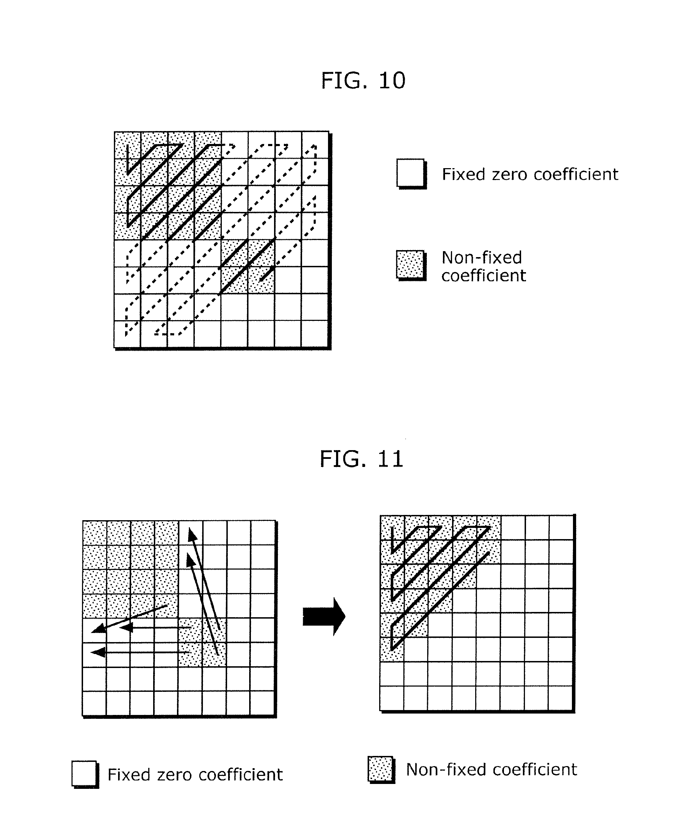

FIG. 10 is an illustration showing scanning of a quantized coefficient block in the suppression unit 301. The figure shows an 8 x 8 quantized coefficient block. The hatched part shows a subset. In general, the quantized coefficients in the quantized coefficient block are divided into two types of coefficients; that is, non-zero coefficients and zero coefficients. In the present invention, the quantized coefficients in the quantized coefficient block are further divided, from different points of view, into two types of coefficients; that is, fixed zero coefficients and non-fixed coefficients.

Here, a fixed zero coefficient means a quantization coefficient which does not belong to a subset. Such fixed zero coefficient means a coefficient, at a position other than the subset in the block, which is fixedly set at zero by the zero insertion unit 901 of the moving picture decoding apparatus 201. All the fixed zero coefficients in the moving picture decoding apparatus 201 are zero coefficients. In addition, fixed zero coefficients are skipped in scanning by the suppression unit 301 in the moving picture encoding apparatus 101, and excluded from encoding by the entropy encoding unit 190. Since the fixed zero coefficients are excluded from the encoding in the moving picture encoding apparatus 101, the values do not have any meaning. In addition, in the moving picture encoding apparatus 100 of the first embodiment, fixed zero coefficients are suppressed to zeros by not being selected by the suppression unit 300. In the moving picture encoding apparatus 100, all the fixed zero coefficients are zero coefficients (suppressed to zeros).

In addition, non-fixed coefficients are quantized coefficients other than fixed zero coefficients, and belong to a subset. A non-fixed coefficient is a non-zero coefficient or a zero coefficient.

As shown in FIG. 10, the suppression unit 301 selects only the quantized coefficients (non-fixed coefficients) belonging to the subset in the scanning of the quantized coefficient block, and skips the quantized coefficients which do not belong to the subset (fixed-zero coefficients). In the zigzag scanning shown in the figure, the parts indicated by solid lines are selected in the scanning, and the parts indicated by broken lines are skipped in the scanning.

FIG. 11 is an illustration showing variations of scanning operations in the suppression 301. As shown in the left side of the figure, the suppression unit 301 rearranges the quantized coefficients belonging to the subset at the positions which are not skipped in a scanning order. In the figure, the four quantized coefficients in high-frequency segments are rearranged at the positions adjacent to low-frequency segments. The right side of the figure shows scanning after the rearrangement by the suppression unit 301. In this way, rearrangement makes it possible to eliminate a skip in the scanning. In other words, since this eliminates the necessity of scanning while determining whether each of the quantized coefficients is included in the subset, it is possible to simplify and accelerate the scanning.

Next, a description is given of embedding arrangement data into a quantization matrix by the embedding unit 302.

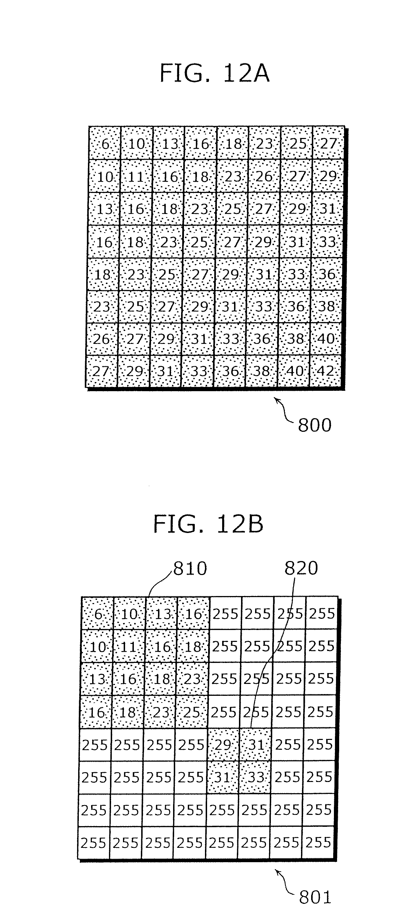

FIG. 12A is a diagram showing an example of a quantization matrix before the embedding of the arrangement data. The figure shows a default quantization matrix 800 used in the H. 264/MPEG4-AVC standard. The 8 × 8 quantization matrix is made up of 64 quantized values. Each value is a quantized value used for quantization of corresponding transform coefficient. Each transform coefficient in the transform coefficient block is divided by the corresponding quantization value, and the integral part in the result becomes a quantized transform coefficient. The greater the quantized value, the more coarsely quantized the transform coefficient. The quantized values increase from the upper left to the lower right in the quantization matrix. Thus, the transform coefficients of high-frequency domain are coarsely quantized compared with the quantization in the low-frequency domain.

FIG. 12B is a diagram showing an example of a quantization matrix after the embedding of the arrangement data. The figure shows an 8 x 8 quantization matrix 801. The hatched segments 810 and 820 show the position of a subset. Each value in the segments 810 and 820 are quantized values. On the other hand, arrangement data is embedded in the part which is not hatched. Each value "255" in the not-hatched part does not mean a quantized value. The value is a special value which means that the position of the block in the quantized transform coefficient is outside the subset; in other words, it shows the position of a fixed zero coefficient in the quantized transform coefficient block. In this way, the arrangement data embedded in the quantization matrix directly shows the positions of all the fixed zero coefficients in the quantized transform coefficient block, and indirectly shows the positions of the non-fixed coefficients (the arrangement of the subset) in the quantized transform coefficient block.

In this way, embedding arrangement data in the quantization matrix allows the arrangement data extraction unit 902 of the moving picture decoding apparatus 201 to easily extract the arrangement data from the quantization matrix.

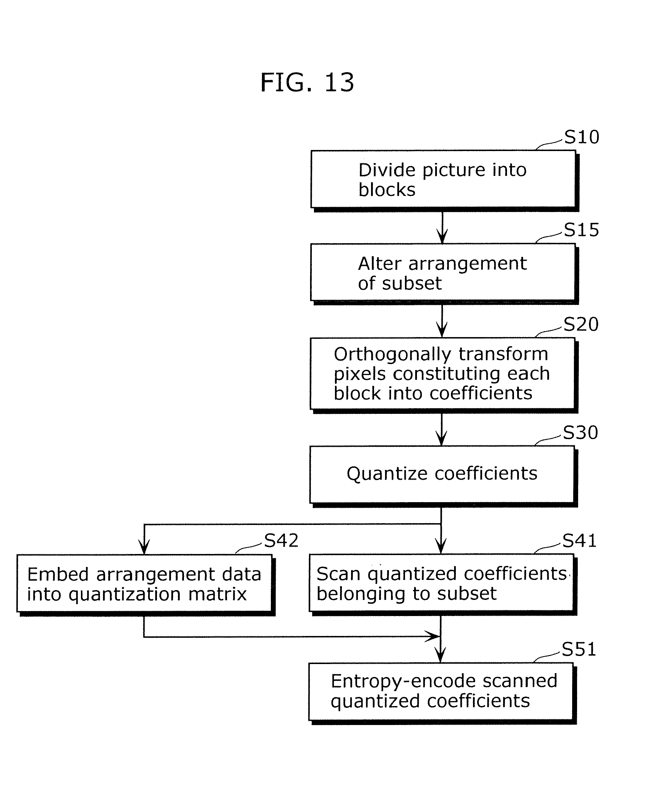

FIG. 13 is a flowchart indicating operations of the moving picture encoding apparatus 101. The figure differs from FIG. 7 in that it additionally has Steps S41 and S42 instead of Step S40. Descriptions for the same points are omitted, and the different points are described.

The suppression unit 301 selects only the quantized coefficients (non-fixed coefficients) belonging to a subset in the quantized coefficient block from the transform and quantization unit 120, and skips the quantized coefficients (fixed zero coefficients) which do not belong to the subset (Step S41). In this way, the fixed zero coefficients outside the subset are excluded from scanning and encoding, improving the encoding efficiency. Further, embedding unit 302 embeds the arrangement data identifying the arrangement of a subset in a block into the quantization matrix (Step S42). Embedding the arrangement data in the quantization matrix makes it possible to signal, to the moving picture decoding apparatus, the arrangement of the subset in the block (more correctly, the position of the part outside the subset; that is, the positions of the fixed zero coefficients).

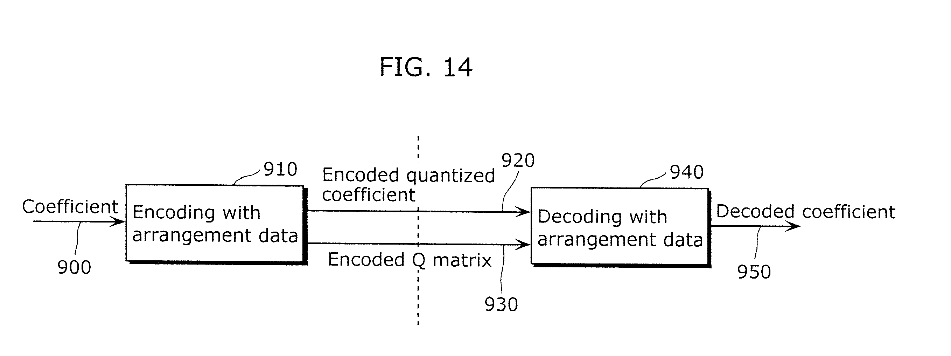

FIG. 14 is a schematic diagram showing a signaling between the moving picture encoding apparatus and the moving picture decoding apparatus. The unit 910 in the figure corresponds to a suppression unit 310, an embedding unit 302, and an entropy encoding unit 190 which perform quantization in the transform and quantization unit 120. The unit 940 corresponds to an entropy decoding unit 210, a zero insertion unit 901, an arrangement data extraction unit 902 and an inverse quantization and inverse transform unit 220 in the moving picture decoding unit 201. Since the arrangement data showing the positions of the fixed zero coefficients are embedded in the quantization matrix, it is signaled to the moving picture decoding apparatus 201 together with the quantization matrix. This signaling is performed on a basis of sequence, picture, frame, field, slice, macroblock or a predetermined number of blocks. Based on the signaled arrangement data, the moving picture decoding apparatus 201 reconstructs the scanning of the subset used by the moving picture encoding apparatus 101, and decodes the subset into transform coefficients.

In the figure, a quantization matrix (Q-matrix) is used in order to notify the positions of the fixed zero coefficients. The quantization matrix identifies the quantized values used for quantization on a transform coefficient 900 basis. The special value (for example, 255) in the quantization matrix means that the corresponding transform coefficient is a fixed zero coefficient. Consequently, this transform coefficient is not subjected to scanning and encoding in the moving picture encoding apparatus 101. The quantization matrix is transmitted to the moving picture decoding apparatus together with the other picture information data. With the H. 264/MPEG4-AVC standard, the quantization matrix can be changed at an image level. The flag "scaling_matrix_present_flag" is set to show that the quantization matrix is made up of sixty-four 8-bit values. The unit 940 makes judgment on the transform coefficient 900 on which neither scanning nor encoding is performed using the quantization matrix 930, and reconstructs effective scanning of the subset performed by the unit 910. Thus, the moving picture decoding apparatus performs effective scanning, decodes the transform coefficients in the subset 920, and generates the decoded transform coefficients of the complete set 950.

Operations shown in FIG. 14 can be used for restricting the spatial frequency used for encoding an image area. This can be realized by explicitly setting a special value (for example, 255) for an element, within the quantization matrix, corresponding to the transform coefficient to be excluded. The excluded transform coefficient is marked as a fixed zero coefficient in this way, and is not subjected to either scanning or encoding. The amount of data to be encoded is further reduced in this way, improving the encoding efficiency.

In the above method, only the subset of transform coefficients which have been actually used for encoding a video image is encoded. Thus, it is possible to set a subset suitably depending on the image content, or depending on the result of the transform step. For example, a subset may be set depending on the result by transforming the already-encoded image area within the same frame, or between the preceding frames. In addition, it is possible to alter a subset of transform coefficients depending on a predetermined sequence including the subset. Such subset alteration can be performed on a basis of sequence, picture, slice, or macroblock.

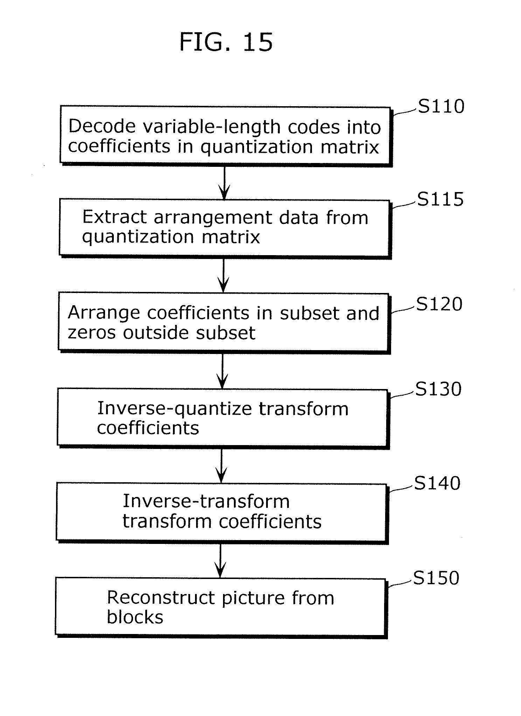

FIG. 15 is a flowchart indicating operations of the moving picture decoding apparatus. In the figure, the entropy decoding unit 210 decodes a variable-length code (bitstream) from the moving picture encoding apparatus 101 into transform coefficients within a subset, and decodes them into a quantization matrix (Step S110). The arranged data extraction unit 902 extracts arrangement data from the decoded quantization matrix, and determines the arrangement of the subset in the block (or the position of the fixed zero coefficient) based on the arrangement data (Step S115). Further, the zero insertion unit 901 arranges the decoded quantization coefficients at the position of the subset in the block, and inserts predetermined values of zeros as the quantized coefficients at the positions outside the subset in the block (Step S120). This enables the obtainment of a full set of quantized transform coefficients in the block. Further, the inverse quantization and inverse transform unit 220 generates a transform coefficient block by performing an inverse quantization on the quantized transform coefficient block (Step S130), and performing an inverse orthogonal transform on the transform coefficient block (Step S140). In this way, a prediction residual block is obtained. Further, the adder 230 reconstructs a pixel block by adding the prediction residual block and the predictive picture (Step S150). The picture made up of the reconstructed blocks is displayed or recorded on a recording medium.

As described above, the moving picture encoding apparatus 101 in this embodiment transforms the pixel data into a frequency domain, scans only the transform coefficients included in a predetermined subset, and encodes them. This makes it possible to achieve a higher data compression rate. In addition, arrangement data related to the positions of fixed zero coefficients are embedded in a quantization matrix. In addition, the moving picture encoding apparatus 201 alters the arrangement of a subset in a block. Thus, it is possible to prevent a deterioration in picture quality due to the losses of the not-selected quantized coefficients. Further, the moving picture decoding apparatus 201 extracts information related to the positions of fixed zero coefficients from the quantization matrix, and inserts zeros at the positions of the quantized transform coefficients included in a predetermined subset and the positions of fixed zero coefficients outside the subset of the block. In this way, all the transform coefficients within the subset in the block and outside the subset are decoded. Decoding is properly performed by inserting the fixed zero coefficients which are not included in a bitstream into the correct positions.

### (Third Embodiment)

In the second embodiment, a description has been given of a moving picture encoding apparatus which excludes the quantized coefficients outside a subset from variable-length encoding, encodes only the quantized coefficients within the subset into variable-length codes, and embeds arrangement data indicating the position of the subset into a quantization matrix. In contrast, in this embodiment, a description is given of a moving picture encoding apparatus which encodes such arrangement data in an encoded stream (bitstream) instead of embedding it in a quantized coefficient.

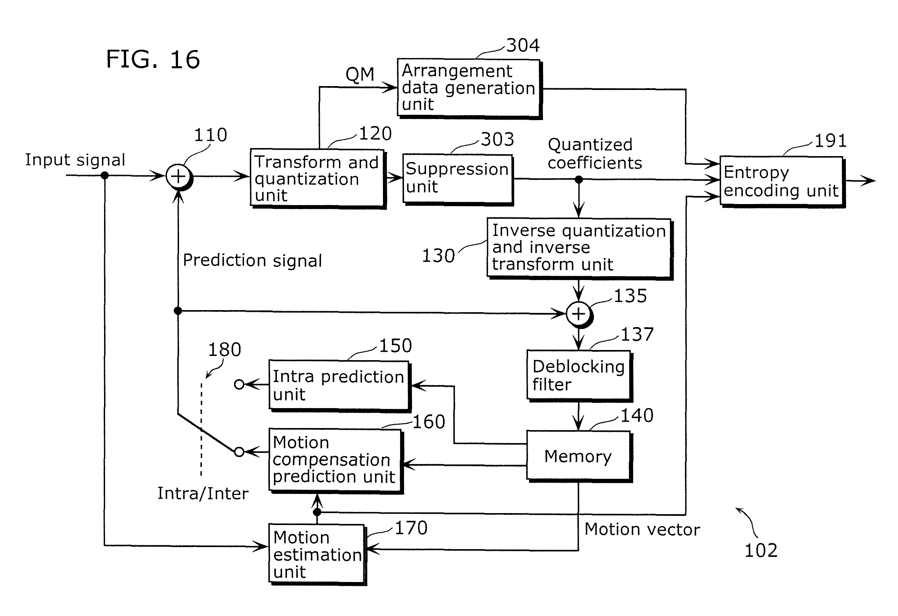

FIG. 16 is a block diagrams showing the structure of the moving picture encoding apparatus 102 in this embodiment. The figure differs from FIG. 8 in that it has a suppression unit 303 and an arrangement data generation unit 304 instead of the suppression unit 301 and the embedding unit 302 and has an entropy encoding unit 191 instead of the entropy encoding unit 190. The same structural elements are assigned the same reference numerals, descriptions thereof are omitted, and only the different points are mainly described.

The suppression unit 303 sequentially scans the quantized coefficients in the quantized coefficient block after the rearrangement shown in FIG. 11. The other operations are the same as those of the suppression unit 301.

The arrangement data generation unit 304 generates arrangement data identifying the arrangement of a subset in a block. The arrangement data is encoded by the entropy encoding unit 190, and transmits it to the moving picture decoding apparatus.

In addition to the function of the entropy encoding unit 190, the entropy encoding unit 191 encodes the arrangement data generated by the arrangement data generation unit 304.

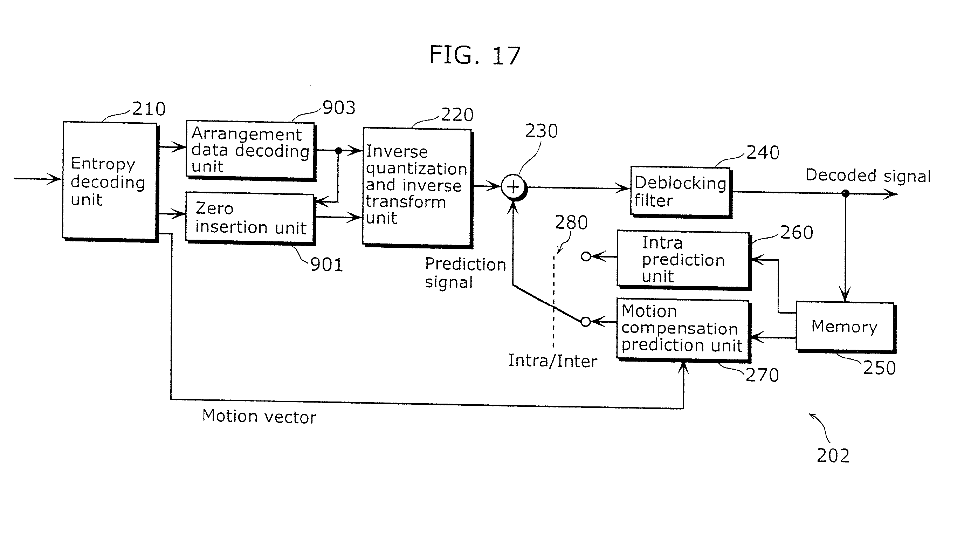

FIG. 17 is a block diagram showing the structure of the moving picture decoding apparatus 202. The figure differs from FIG. 9 in that it has an arrangement data decoding unit 903 instead of the arrangement data extraction unit 902. The same structural elements are assigned the same reference numerals, descriptions thereof are omitted, and only the different points are mainly described.

The arrangement data decoding unit 903 decodes the encoded arrangement data which is obtained from the entropy decoding unit 210 into arrangement data.

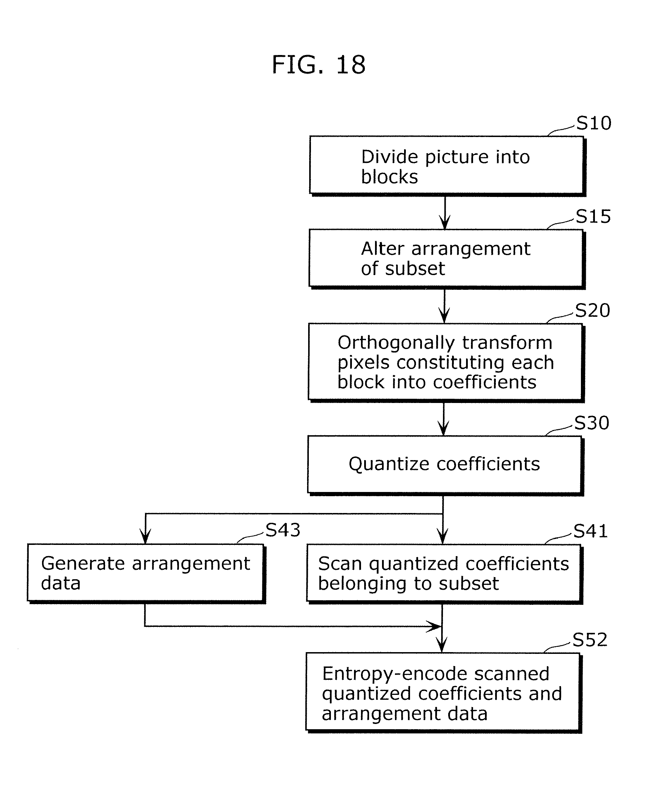

FIG. 18 is a flowchart indicating operations of the moving picture encoding apparatus 102. The figure differs from FIG. 3 in that it has Step S43 instead of Step S42, and has Step S52 instead of Step S51. Descriptions for the same points are omitted, and only the different points are described. In addition, in Step S43, the arrangement data generation unit 304 generates the arrangement data showing the arrangement of the subset within the quantized coefficient block.

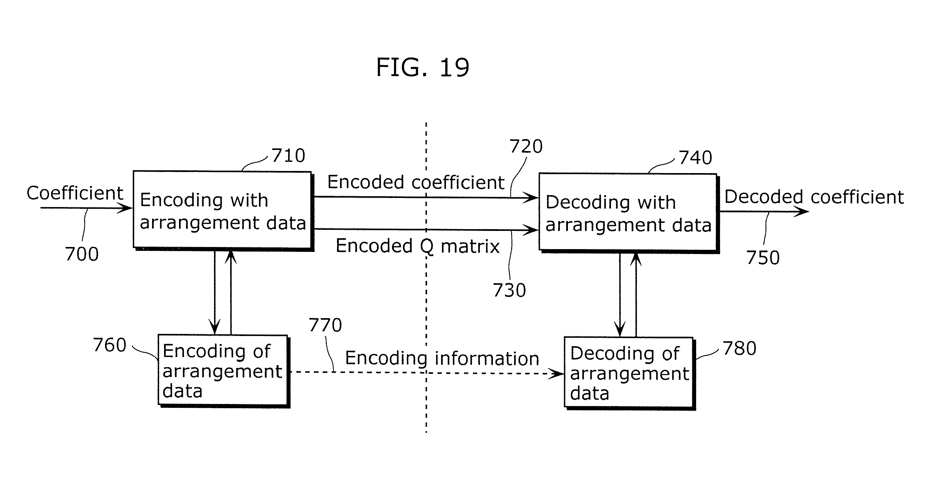

FIG. 19 is a schematic diagram showing signaling between the moving picture encoding apparatus 102 and the moving picture decoding apparatus 202. A unit 710 in the figure corresponds to the transform and quantization unit 120, the suppression unit 303, and the entropy encoding unit 191 of the moving picture encoding unit 102. A unit 760 corresponds to the arrangement data generation unit 304 in the moving picture encoding apparatus 102.

In addition, the unit 740 corresponds to the entropy decoding unit 210, the zero insertion unit 901, and the inverse quantization and inverse transform unit 220. The unit 780 corresponds to the arrangement data decoding unit 903 in the moving picture decoding unit 201.

The arrangement data is included in the encoding information 770 and signaled from the unit 760 to the unit 780.

This signaling can be performed explicitly or implicitly. An explicit signaling is performed by including arrangement data in encoding information, and encoding the encoding information in a bitstream indicating encoded video data. Here, it is suffice that the arrangement data is transmitted only in the case where the arrangement of fixed zero coefficients is altered. Hence, keeping the arrangement of fixed zero coefficients is useful for optimizing necessary storage capacity or transmission band. For example, an explicit signaling is performed on a basis of sequence, picture, frame, field, block or a predetermined number.

Note that an implicit signaling has been described in the second embodiment. In this case, no information is to be newly added in a bitstream.

A method for dividing quantized transform coefficients into fixed zero coefficients and non-fixed coefficients (a method for altering subsets) may be determined in advance as a sequence which indicates the order of subsets in advance. This sequence is made up of segmentation patterns which are individually used for encoding, for example, a frame, a slice, a block or the like. Each segmentation pattern may define the arrangement of a subset indicating the positions of fixed zero coefficients in a block and may define the arrangement of the subset showing the positions of the non-fixed coefficients. In addition, the start of such sequence may be defined depending on a picture type. For example, the sequence may be automatically restarted triggered by the transmission of an I-frame. On the other hand, the restart of the sequence may be explicitly signaled by setting a reset flag in the header of the frame, slice, block or the like. In this way, encoding makes it possible to illustrate a change in scenes.

Further, a specific sequence made up of segmentation patterns which are individually used for encoding a frame, slice, block or the like may be explicitly included, for example, in a sequence parameter header and transmitted from the moving picture encoding apparatus to the moving picture decoding apparatus. The segmentation pattern used for encoding the block is implicitly altered on a picture-by-picture basis next time. This method is especially useful in a multi-pass encoding. For example, it is possible to analyze the frequency in a scene in a first pass and determine a segmentation pattern adaptive to the frequency in a scene in a second pass.

Next, a description is given of arrangement data which is generated by the arrangement data generation unit 304.

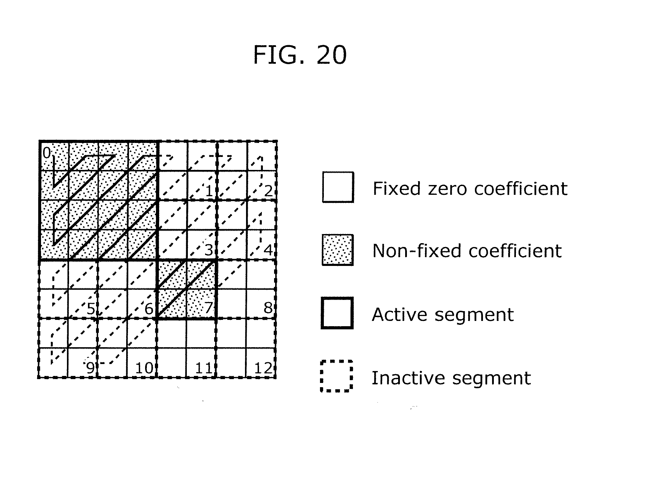

FIG. 20 is an illustration for representing the arrangement data based on segment numbers. The figure shows an example where a quantized transform coefficient block is divided into segments shown by numbers 0 to 12. The respective segments are divided into "active" segments or "inactive" segments depending on whether each segment includes a non-fixed coefficient. Only active segments are scanned and encoded.

The arrangement data shows these active segments. For example, these active segments are signaled by identifiers of the active segments. In the example of the figure, only the segment 0 and the segment 7 are active. This information can be signaled to the moving picture decoding apparatus 202 explicitly or implicitly. As an explicit signaling, unique code characters for listing active or inactive segments may be used. On the other hand, these code characters may be identifiers of active segments. For example, the segmentation shown in FIG. 8 may be identified by a segmentation identifier 1, and the other one may be identified by a segmentation identifier 2.

Note that explicit and implicit signaling may be based on a protocol that specifies a particular order of active segments or conditions under which a particular combination of segments is active. These conditions may depend on the number of the current frames, blocks, image content or the like. For example, it may be specified that the segments 0, 1,... 12 may be applied one by one for consecutive blocks, macroblocks, slices, fields, frames or the like. It may be specified that a particular combination of active segments should be applied to every n frame, whereas a set of n - 1 other combinations has to be adopted respectively for the n - 1 frames in between. In both the cases, no additional information on active or inactive segments have to be transmitted.

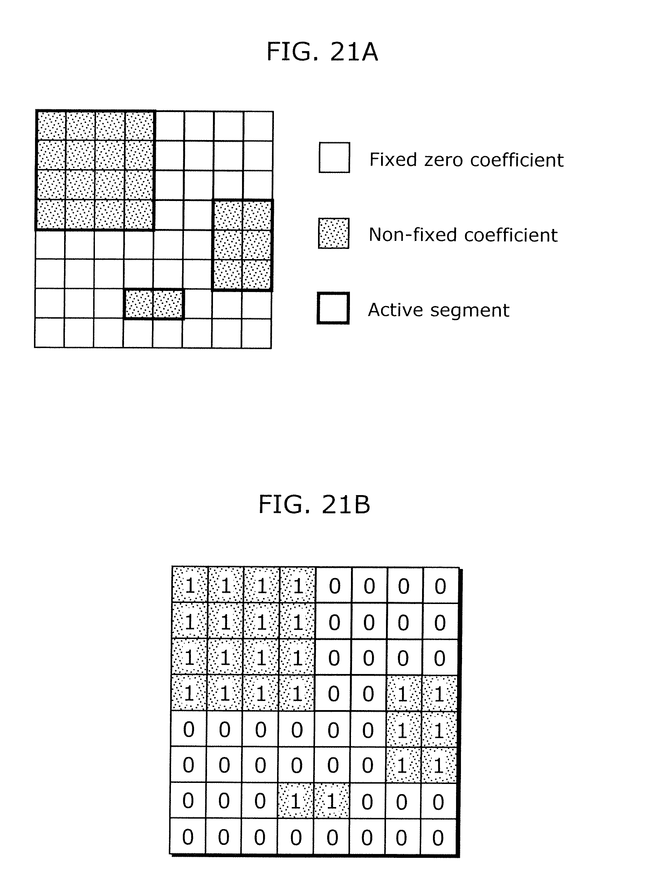

FIG. 21A is an illustration representing arrangement data as bitmap data. In the figure, the parts enclosed by bold lines show active segments indicating the positions of non-fixed coefficients. The non-fixed coefficients corresponding to active segments are subjects of scanning and encoding. As shown in the figure, the arrangement data can be represented as bitmap data corresponding to the active segments. FIG. 21B shows an example of more detailed bitmap data. The figure shows segmentation bitmap data indicating whether each segment is active or not (a non-fixed coefficient or a fixed zero coefficient). A segment corresponds to a coefficient. This makes it easier to represent the positions of non-fixed coefficients and fixed zero coefficients within a block in order to show the arrangement of a subset in the block, and to generate arrangement data.

Note that a segment may correspond to adjacent coefficients.

In addition, the segmentation bitmap shown in FIG. 21B is assigned a map number 1, and another segmentation bitmap is assigned a map number 2. In this case, the moving picture encoding apparatus 102 may previously notify the moving picture decoding apparatus 202 of each segmentation bitmap and notify it of the map number at the time of altering subsets.

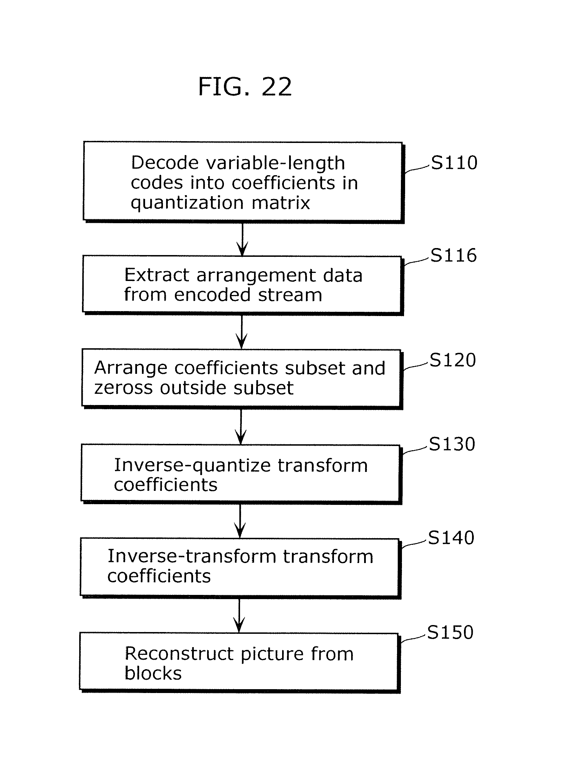

FIG. 22 is a flowchart indicating operations of the moving picture decoding apparatus. The figure differs from FIG. 15 in that it includes Step S116 instead of Step S115. Descriptions for the same points are omitted, and the different points are described. In Step S116, the arrangement data extraction unit 902 decodes the encoded arrangement data from the entropy decoding unit 210 to arrangement data. The arrangement data is represented by segment identifiers as shown in FIG. 20. Otherwise, they may be represented as segmentation bitmap data as shown in FIG. 21B.

As described above, the moving picture encoding apparatus of this embodiment excludes the quantized coefficient outside the subset from variable-length encoding, encodes only the quantized coefficient within the subset into variable-length codes, generates arrangement data indicating the position of the subset, and encodes the arrangement data in an encoded stream (bitstream).

Some variations in the first to third embodiments will be described.

The arrangement of the subset of transform coefficients may be altered depending on a predetermined sequence. In addition, the arrangement of the subset may be altered on a basis of a frame, a field, or an image area according to the predetermined sequence. Hence, both the moving picture encoding apparatus and the moving picture decoding apparatus alter subsets according to the predetermined sequence. This eliminates the necessity of transmitting additional signaling information to the moving picture decoding apparatus, making it possible to maximize the encoding efficiency.

The sequence for altering the arrangement of the subset may be signaled to the moving picture decoding apparatus. Hence, the moving picture encoding apparatus may select a particular sequence and notify the moving picture decoding apparatus of the selection. Thus, the moving picture decoding apparatus can decode the encoded video data.

An indication of restart of the sequence for altering the arrangement of the subset may be signaled to the moving picture decoding apparatus. In this way, the moving picture decoding apparatus can handle a sudden change in image property.

The sequence for altering the arrangement of the subset may be restarted each time a frame having a predetermined type is encoded or decoded. In this way, it is possible to use frame type information about an I-frame or the like in order to implicitly signal the restart of the sequence.

Information indicating a method for rearranging transform coefficients within a subset may be signaled to the moving picture decoding apparatus. This information may define the transform coefficients and the order in which the transform coefficients are encoded in a video data. This allows the moving picture decoding apparatus to identify the subset of transform coefficients and decode the decoded video data in order to perform effective scanning used by the moving picture encoding apparatus.

The arrangement data is preferably a list of transform coefficients which are included in or not included in a part of the predetermined subset of transform coefficients. Hence, the moving picture decoding apparatus can easily reconstruct the effective scanning used for the moving picture encoding apparatus and decode the encoded video data.

The arrangement data may identify a subset among the predetermined subsets. In this way, the arrangement data may be a single number. The predetermined subsets may be set in advance both in the picture encoding apparatus and the picture decoding apparatus, and may be signaled from the moving picture encoding apparatus to the moving picture decoding apparatus.

The signaling of the arrangement data is preferably performed each time the predetermined subset of transform coefficients is altered. This allows the moving picture decoding apparatus to immediately handle the transform coefficients used by the moving picture encoding apparatus.

Preferably, the signaling of the arrangement data is performed once for at least two image areas, or once for a predetermined number of pictures, frames, fields, slices, macroblocks, or blocks. Hence, a gain in an encoding efficiency can be maximized by repeatedly applying the same predetermined subsets of transform coefficients.

The arrangement data may be encoded in the video data. In this way, the arrangement data can be transmitted to the moving picture decoding apparatus in the easiest manner.

The arrangement of the subsets of transform coefficients may be set adaptively to image content in an image area, image content in the adjacent image area, or image content of an image area in a preceding frame. In this way, the moving picture decoding apparatus can optimize a set of frequencies used for encoding video data.

The arrangement of the subsets of transform coefficients may be set based on known information obtained from the result of a transform or quantization step. In addition, the arrangement of the subsets desirably includes non-zero coefficients as much as possible. Hence, it is possible to reduce redundancy in the encoded data and improve the encoding efficiency.

The image area is a pixel block, and an image may be divided into blocks each having the same size. This simplifies dividing an image into image areas at the time of decoding and assembling the encoded image areas to obtain a decoded image.

The arrangement of the subsets is desirably adapted to the image content in each image area. For example, a frequency which most contributes to the image content may be included in the subset. Consequently, it becomes possible to improve the picture quality of the decoded picture without increasing the amount of data to be encoded.

The arrangement of the subsets may be set adaptively to the existence or the size of non-zero coefficients. Accordingly, the arrangement is selected based on the frequency component which most contributes to the image representation in the frequency domain. In this way, with the simple method, picture quality can be suppressed.

The ratio of low-frequency components and high-frequency components in the arrangement of the subsets may be adaptively set depending on the frequency property of the transform coefficients in each image area. By forcibly transmitting the low-frequency parts and adaptively setting the contribution of low-frequency components and the contribution of high-frequency components, picture quality can be suppressed using a simple and effective method.

The arrangement of the subsets may be set only a single frequency which exceeds a predetermined threshold as a predetermined frequency. Hence, the most important frequency component can be selected using a simple and effective method.

As for the arrangement of the subsets, the threshold for setting the predetermined frequency may be adaptively set. Plural frequencies can be set by simply adapting to, for example, image content or an available data rate.

The arrangement of the subsets may be performed by setting the maximum importance for the segment including the lowest frequency, so that the importance of the low-frequency components become higher than the importance of the high-frequency components.

### (Fourth Embodiment)

Further, when a program for embodying the moving picture encoding methods and the moving picture decoding methods shown in the first to third embodiments are recorded in a recording medium such as a flexible disc, an independent computer system can easily execute the processing indicated as each of the embodiments.

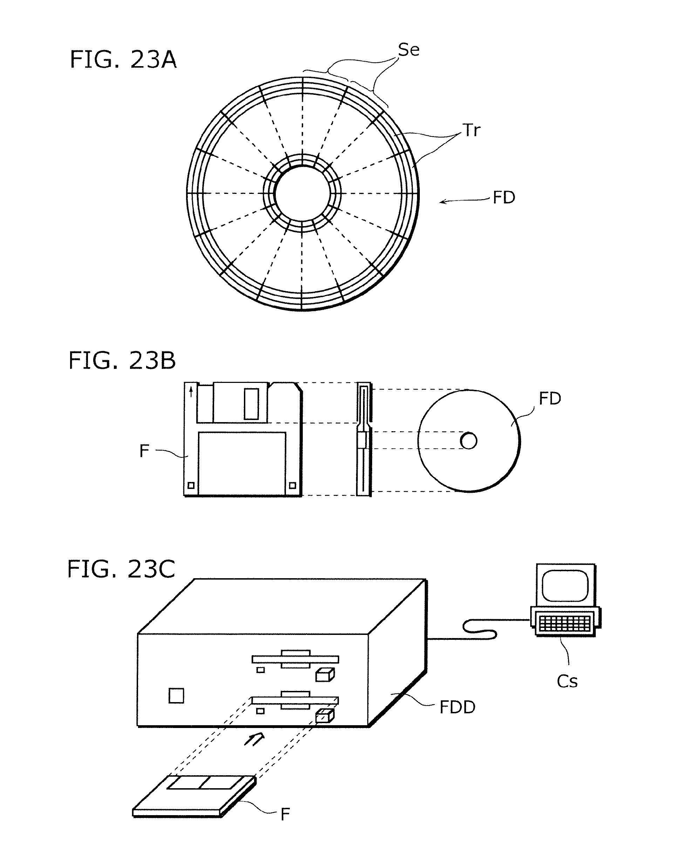

FIG. 23A to FIG. 23C each is an illustration indicating the case where a computer system executes the moving picture encoding method and the moving picture decoding method in each embodiment using a program recorded on a recording medium such as a flexible disc.

FIG. 23B shows a flexible disc and the front view and the cross-sectional view of the appearance of the flexible disc. FIG. 23A shows an example of a physical format of a flexible disc as a recording medium body. A flexible disc FD is contained in a case F, plural tracks Tr are formed concentrically on the surface of the disc from the periphery into the inner radius of the disc, and each track is divided into 16 sectors Se in the angular direction. Therefore, in the case of the flexible disc storing the program, the program is recorded in an area allocated for it on the flexible disc FD.

Also, FIG. 23C shows the structure for recording and reproducing the program on the flexible disc FD. When the program for realizing the moving picture encoding method and the moving picture decoding method is recorded on the flexible disc FD, the computer system Cs writes the program via a flexible disc drive. When the moving picture encoding method and the moving picture decoding method for realizing the moving picture encoding method and the moving picture decoding method are constructed in the computer system by the program on the flexible disc, the program is read out from the flexible disc through a flexible disc drive and transferred to the computer system.

Note that the above description has been given taking a flexible disc as an example of recording media, but an optical disc can be taken instead. The recording media are not limited to these. Any recording medium such as an IC card and a ROM cassette can be taken as long as it can record the program.

### (Fifth Embodiment)

Here, a description is further given of application examples of the moving picture encoding methods and the moving picture decoding methods shown in the embodiments and a system where these methods are used.

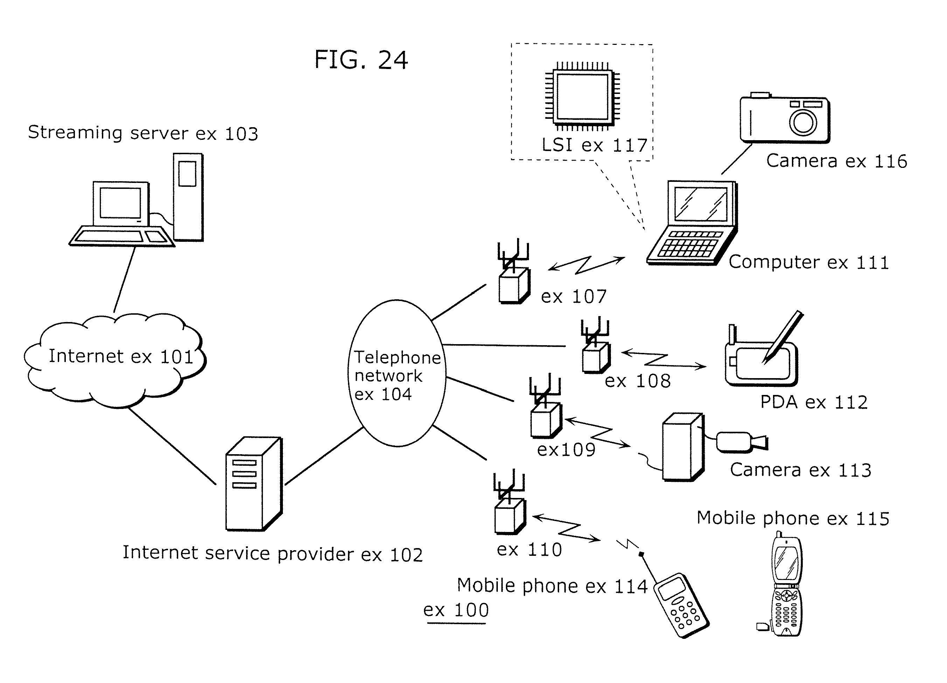

FIG. 24 is a block diagram showing the overall configuration of a content supply system ex100 for realizing content distribution service. The area for providing communication service is divided into cells of desired sizes, and cell sites ex107 to ex110 of fixed wireless stations are placed in the respective cells.

This content supply system ex100 is connected to each apparatus such as a computer ex111, a Personal Digital Assistant (PDA) ex112, a camera ex113, a cellular phone ex114 and a cellular phone with a camera ex115 via, for example, a combination of the Internet ex101, an Internet service provider ex102, a telephone network ex104 and cell sites ex107 to ex110.

However, the content supply system ex100 is not limited to the configuration as shown in FIG. 14, and may be connected to a combination of any of them. Also, each apparatus can be connected directly to the telephone network ex104, not through the cell sites as fixed radio stations ex107 to ex110.

The camera ex113 is an apparatus capable of shooting video (moving pictures) such as a digital video camera. The cell phone can be a cell phone of a Personal Digital Communications (PDC) system, a Code Division Multiple Access (CDMA) system, a Wideband-Code Division Multiple Access (W-CDMA) system or a Global System for Mobile Communications (GSM) system, a Personal Handy-phone system (PHS) or the like.

A streaming server ex103 is connected to the camera ex113 via the cell site ex109 and the telephone network ex104, which enables live distribution or the like using the camera ex113 based on the coded data transmitted from the user. Either the camera ex113 or the server for transmitting the data can code the shot data. Also, the moving picture data shot by a camera ex116 can be transmitted to the streaming server ex103 via the computer ex111. The camera ex116 is an apparatus capable of shooting still and moving pictures such as a digital camera. In this case, either the camera ex116 or the computer ex111 can code the moving picture data. An LSI ex117 included in the computer ex111 or the camera ex116 performs coding processing. Software for coding and decoding pictures can be integrated into any type of storage media (such as CD-ROMs, flexible discs, hard discs and the like) that is a recording medium which is readable by the computer ex111 or the like. Furthermore, a cellular phone with a camera ex115 can transmit the moving picture data. This moving picture data is the data coded by the LSI included in the cellular phone ex115.

The content supply system ex100 codes content (such as a music live video) shot by users using the camera ex113, the camera ex116 or the like in the same manner as the above-mentioned embodiments and transmits them to the streaming server ex103, while the streaming server ex103 makes stream distribution of the content data to the clients upon their request. The clients include the computer ex111, the PDA ex112, the camera ex113, the cellular phone ex114 and so on that are capable of decoding the above-mentioned coded data. In this way, the content supply system ex100 enables the clients to receive and reproduce the coded data, and further to receive, decode and reproduce the data in real time so as to realize personal broadcasting.

When each apparatus in this system performs encoding or decoding, the moving picture encoding apparatus or the moving picture decoding apparatus can be used, as shown in the above-mentioned embodiments.
A cellular phone will be explained as an example of the apparatus.

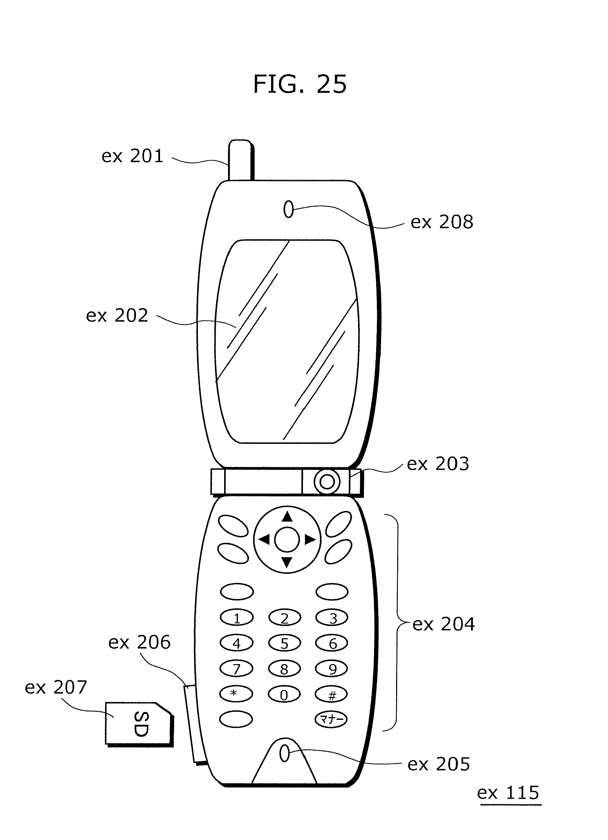

FIG. 25 is a diagram showing the cellular phone ex115 using the moving picture encoding apparatus and the moving picture decoding apparatus described in the above-mentioned embodiments. The cellular phone ex115 has an antenna ex201 for communicating with the cell site ex110 via radio waves, a camera unit ex203 capable of shooting moving and still pictures such as a CCD camera, a display unit ex202 a liquid crystal display for displaying the data obtained by decoding moving pictures shot by the camera unit ex203, moving pictures received by the antenna ex201, and the like, a body unit including a set of operation keys ex204, a voice output unit ex208 such as a speaker for outputting voices, a voice input unit 205 such as a microphone for inputting voices, a storage medium ex207 for storing coded or decoded data such as data of moving or still pictures shot by the camera, data of received e-mail and data of moving or still pictures, and a slot unit ex206 which attaches the storage medium ex207 to the cellular phone ex115. The storage medium ex207 is equipped with a flash memory element, a kind of Electrically Erasable and Programmable Read Only Memory (EEPROM) that is an electrically erasable and rewritable nonvolatile memory, in a plastic case such as an SD card.

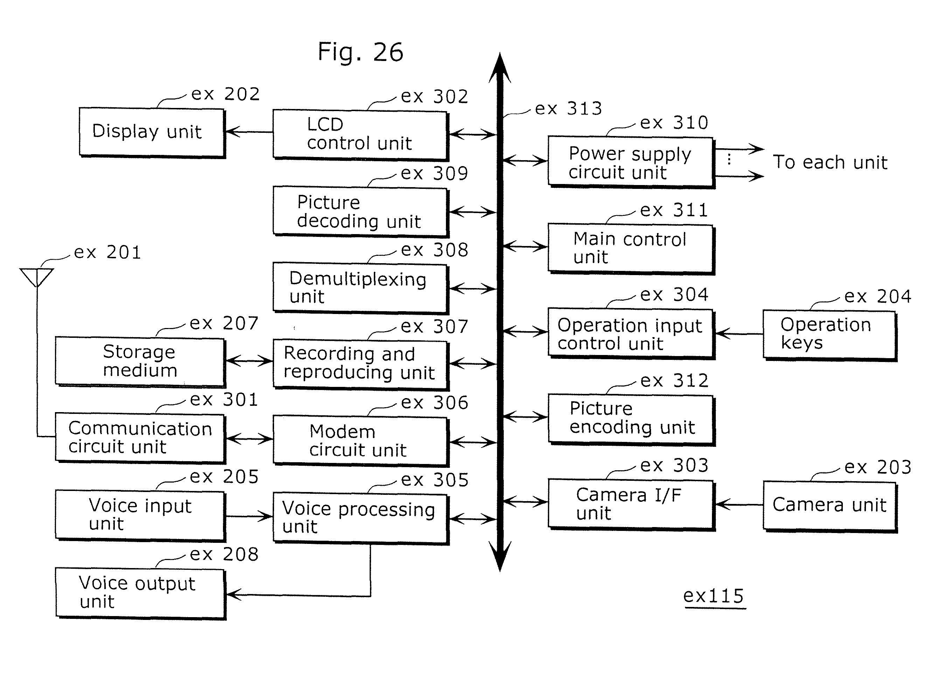

Next, a description is given of the cellular phone ex115 with reference to FIG. 26. In the cellular phone ex115, a main control unit ex311, which performs centralized control on each unit of the body unit including the display unit ex202 and operation keys ex204, is connected to a power supply circuit unit ex310, an operation input control unit ex304, a picture encoding unit ex312, a camera interface unit ex303, a Liquid Crystal Display (LCD) control unit ex302, a picture decoding unit ex309, a demultiplexing unit ex308, a recording and reproducing unit ex307, a modem circuit unit ex306 and a voice processing unit ex305 to each other via a synchronous bus ex313.

When a call-end key or a power key is turned ON by a user's operation, the power supply circuit unit ex310 supplies respective components with power from a battery pack so as to activate the digital cellular phone with a camera ex115 for making it into a ready state.

In the cell phone ex115, the voice processing unit ex305 converts the voice signals received by the voice input unit ex205 in conversation mode into digital voice data under the control of the main control unit ex311 including a CPU, a ROM and a RAM, the modem circuit unit ex306 performs spread spectrum processing of the digital voice data, and the communication circuit unit ex301 performs digital-to-analog conversion and frequency transform of the data so as to transmit it via the antenna ex201. Also, in the cellular phone ex115, the communication circuit unit ex301 amplifies the data received by the antenna ex201 in conversation mode and performs frequency transform and analog-to-digital conversion for the data, the modem circuit unit ex306 performs inverse spread spectrum processing of the data, and the voice processing unit ex305 converts it into analog voice data so as to output it via the voice output unit ex208.

Furthermore, when transmitting e-mail in data communication mode, the text data of the e-mail inputted by operating the operation keys ex204 on the body unit is transmitted to the main control unit ex311 via the operation input control unit ex304. In the main control unit ex311, after the modem circuit unit ex306 performs spread spectrum processing of the text data and the communication circuit unit ex301 performs digital-to-analog conversion and frequency transform for it, the data is transmitted to the cell site ex110 via the antenna ex201.

When picture data is transmitted in data communication mode, the moving picture data shot by the camera unit ex203 is supplied to the picture encoding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture encoding unit ex312, which includes the moving picture encoding apparatus as described in the present invention, compresses and encodes the picture data supplied from the camera unit ex203 using the encoding method used for the moving picture encoding apparatus as shown in the above-mentioned embodiments so as to transform it into encoded picture data, and transmits it to the demultiplexing unit ex308. At this time, the cellular phone ex115 transmits the voices received by the voice input unit ex205 during shooting by the camera unit ex203 to the demultiplexing unit ex308 as digital voice data via the voice processing unit ex305.

The demultiplexing unit ex308 multiplexes the encoded picture data supplied from the picture encoding unit ex312 and the voice data supplied from the voice processing unit ex305 using a predetermined method, the modem circuit unit ex306 performs spread spectrum processing on the multiplexed data obtained as a result of the multiplexing, and the communication circuit unit ex301 performs digital-to-analog conversion and frequency transform of the data to be transmitted via the antenna ex201.

As for receiving data of a moving picture file which is linked to a Web page or the like in data communication mode, the modem circuit unit ex306 performs spread spectrum processing of the signal received from the cell site ex110 via the antenna ex201, and transmits the multiplexed data obtained as a result of the processing to the demultiplexing unit ex308.

In order to decode the multiplexed data received via the antenna ex201, the demultiplexing unit ex308 separates the multiplexed data into an encoded bitstream of picture data and an encoded bitstream of voice data, and supplies the current encoded picture data to the picture decoding unit ex309 and the current voice data to the voice processing unit ex305 respectively via the synchronous bus ex313.

Next, the picture decoding unit ex309, which includes the moving picture decoding apparatus as described in the above invention, decodes the encoded bitstream of picture data using the decoding method corresponding to the encoding method as shown in the above-mentioned embodiments to generate reproduced moving picture data, and supplies this data to the display unit ex202 via the LCD control unit ex302, and thus, for instance, the moving picture data included in a moving picture file linked to a Web page is displayed. At the same time, the voice processing unit ex305 converts the voice data into analog voice data, and supplies this data to the voice output unit ex208, and thus, for instance, voice data included in a moving picture file linked to a Web page is reproduced.

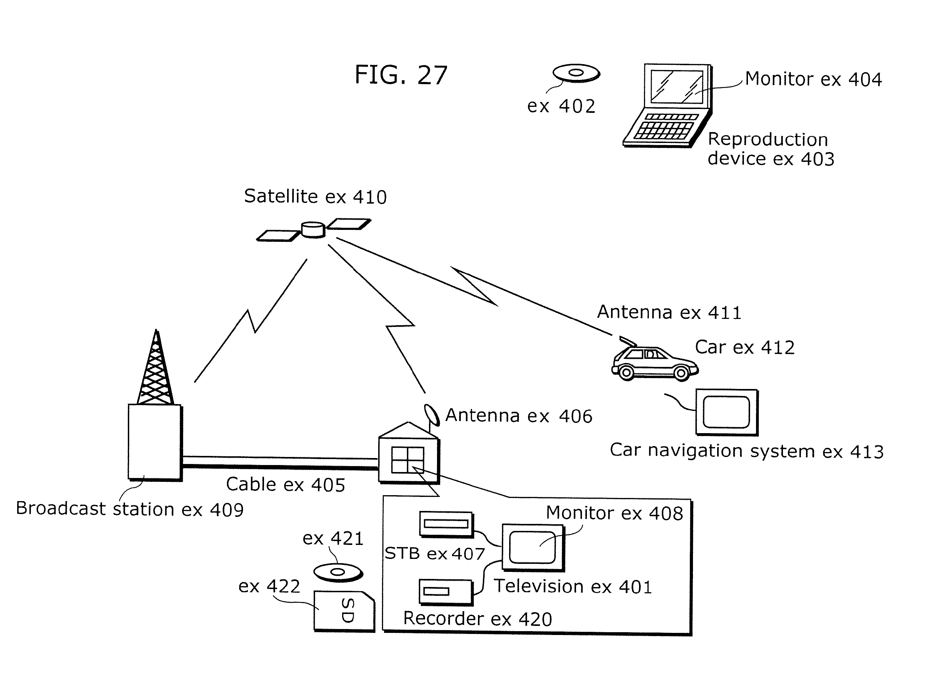

The present invention is not limited to the above-mentioned system, and at least either the moving picture encoding apparatus or the moving picture decoding apparatus in the above-mentioned embodiments can be incorporated into a digital broadcasting system as shown in FIG. 27. Such ground-based or satellite digital broadcasting has been in the news lately. More specifically, an encoded bitstream of video information is transmitted from a broadcast station ex409 to a communication or a broadcast satellite ex410 via radio waves. Upon receipt of it, the broadcast satellite ex410 transmits radio waves for broadcasting, a home-use antenna ex406 with a satellite broadcast reception function receives the radio waves, and a television (receiver) ex401, a set top box (STB) ex407 or the like decodes and reproduce the encoded bitstream. The moving picture decoding apparatus as shown in the above-mentioned embodiments can be implemented in the reproduction apparatus ex403 for reading out and decoding the encoded bitstream recorded on a storage medium ex402 that is a recording medium such as a CD and a DVD. In this case, the reproduced video signals are displayed on a monitor ex404. It is also conceived to implement the moving picture decoding apparatus in the set top box ex407 connected to a cable ex405 for a cable television or the antenna ex406 for satellite and/or ground-based broadcasting so as to reproduce them on a monitor ex408 of the television. The moving picture decoding apparatus may be incorporated into the television, in stead of in the set top box. Otherwise, a car ex412 having an antenna ex411 can receive signals from the satellite ex410, the cell site ex107 or the like for reproducing moving pictures on a display apparatus such as a car navigation system ex413.

Furthermore, the moving picture encoding apparatus shown in the above-mentioned embodiments can encode picture signals for recording on a recording medium. As a concrete example, there is a recorder ex420 such as a DVD recorder for recording picture signals on a DVD disc ex421 and a disc recorder for recording them on a hard disc. They can be recorded on an SD card ex422. If the recorder ex420 includes the moving picture decoding apparatus shown in the above-mentioned embodiment, the picture signals recorded on the DVD disc ex421 or the SD card ex422 can be reproduced for display on the monitor ex408.

Note that a conceivable configuration of the car navigation system ex413 is the configuration obtained by eliminating the camera unit ex203, the camera interface unit ex303 and the picture encoding unit ex312 from existing components in FIG. 26. The same goes for the computer ex111, the television (receiver) ex401 and the like.

In addition, three types of implementation can be conceived for a terminal such as the above-mentioned cell phone ex114, a transmitting/receiving terminal implemented with both a moving picture encoding apparatus and a moving picture decoding apparatus, a transmitting terminal implemented with a moving picture encoding apparatus only, and a receiving terminal implemented with a moving picture decoding apparatus only.

As described above, it is possible to use the moving picture encoding apparatus or the moving picture decoding apparatus in the above-mentioned embodiments in any of the above-mentioned apparatuses and systems, and by using this method, the effects described in the above embodiments can be obtained.

The functional blocks in the block diagrams shown as FIG. 1, FIG. 2, FIG. 8, FIG. 9, FIG. 16 and FIG. 17 in the respective embodiments are typically achieved in the form of a Large Scale Integrated (LSI) circuit that is an integrated circuit. This LSI may be integrated into one chip, or may be integrated into plural chips (For example, the functional blocks other than a memory may be integrated into one chip). Here, it is called LSI, but it may also be called IC, system LSI, super LSI, or ultra LSI depending on the degree of integration.

Moreover, ways to achieve an integrated circuit are not limited to the use of the LSI. A special circuit or a general-purpose processor and so forth may also be used for achieving the integration. A Field Programmable Gate Array (FPGA) that can be programmed or a reconfigurable processor that allows re-configuration of the connection or configuration of LSI may be used after LSI is manufactured.

Further, with advancement in technology of manufacturing semiconductors or other derivative technique, a new integration technology resulting in replacement of LSI may emerge. The integration may be carried out using this technology. Application of biotechnology is one such possibility.

In addition, among the respective functional blocks, only the unit for storing data may be separately structured like the recording medium 115 in this embodiment, without integrating it into one chip.

The main parts among the respective functional blocks in the block diagrams shown as FIG. 1, FIG. 2, FIG. 8, FIG. 9, FIG. 16 and FIG. 17 and in the flowcharts shown as FIG. 7, FIG. 13, FIG. 15, FIG. 18 and FIG. 22 are realized by a processor and a program.

Also, the moving picture encoding method and the moving picture decoding method shown in the above-mentioned embodiments can be applied for the apparatuses or systems. This application makes it possible to obtain the effect described in the embodiments.

The present invention is not limited to the above-mentioned embodiments, and the embodiments of the invention may be varied and modified in many ways without deviating from the scope of the present invention.

### Industrial Applicability

The present invention is suitable for encoding apparatuses and decoding apparatuses which encode and decode pictures, and in particular to web servers which distribute video, network terminals which receive the video, digital cameras which are capable of recording and reproducing the video, mobile phones with a camera, DVD recording/reproducing apparatuses, PDAs, personal computers and the like.

## Claims

1. A moving picture encoding method for orthogonally transforming pixels which constitute a block into coefficients indicating frequencies, quantizing the coefficients, and encoding the quantized coefficients, said method comprising:
selecting quantized coefficients belonging to a subset of a block, from the block of frequency coefficients which are either the coefficients prior to quantization or the quantized coefficients; and
altering an arrangement of the subset in the block.

2. The moving picture encoding method according to Claim 1,
wherein the arrangement of the subset is altered in relation to at least one of the following (i) to (v):
(i) a completion of encoding a picture;
(ii) a completion of encoding a predetermined number of blocks;
(iii) content of a current picture to be encoded;
(iv) a position of a block in a picture; and
(v) a comparison between each frequency coefficient and a threshold.

3. The moving picture encoding method according to Claim 1, further comprising
suppressing, to zeros, coefficients which do not belong to the subset,
wherein, in the encoding, the selected frequency coefficients and the frequency coefficients which have been suppressed to zeros are encoded into variable-length codes.

4. The moving picture encoding method according to Claim 1,
wherein, in the encoding, frequency coefficients which have not been selected are excluded from variable-length encoding.

5. The moving picture encoding method according to Claim 4,
wherein, in said selecting, the frequency coefficients belonging to the subset are sequentially scanned, and
in the encoding, the scanned frequency coefficients are encoded into variable-length codes.

6. The moving picture encoding method according to Claim 4,
wherein, in said selecting,
the frequency coefficients belonging to the subset are rearranged in a scanning order, and
the rearranged frequency coefficients belonging to the subset are sequentially scanned.

7. The moving picture encoding method according to Claim 4, further comprising
embedding arrangement data for identifying the arrangement of the subset in the block, into a quantization matrix,
wherein, in the encoding, the quantization matrix in which the arrangement data is embedded is encoded.

8. The moving picture encoding method according to Claim 4, further comprising
generating the arrangement data for identifying the arrangement of the subset,
wherein, in the encoding, the arrangement data is encoded.

9. The moving picture encoding method according to Claim 8,
wherein the arrangement data includes an identifier for identifying a segment corresponding to the subset among the segments which constitute the block.

10. The moving picture encoding method according to Claim 8,
wherein the arrangement data is bitmap data indicating whether each frequency coefficient in the block belongs to the subset.

11. A moving picture decoding method comprising:
decoding variable-length codes into quantized coefficients and arrangement data for identifying an arrangement of a subset in a block;
arranging the decoded quantized coefficients in the subset in the block based on the arrangement data;
arranging zero coefficients outside the subset in the block, based on the arrangement data;
inversely quantizing the block in which the decoded quantized coefficients and predetermined values are arranged; and
orthogonally transforming the inversely quantized block.

12. The moving picture encoding method according to Claim 11,
wherein, in said decoding, a quantization matrix is decoded from the variable-length codes, and
the arrangement data is extracted from the decoded quantization matrix.

13. The moving picture encoding method according to Claim 11,
wherein the arrangement data includes an identifier for identifying a segment corresponding to the subset among the segments which constitute the block.

14. The moving picture encoding method according to Claim 11,
wherein the arrangement data is bitmap data indicating whether each frequency coefficient in the block belongs to the subset.

15. A moving picture encoding apparatus which orthogonally transforms pixels constituting a block into coefficients indicating frequencies, quantizes the coefficients, and encodes the quantized coefficients, said apparatus comprising:
a selecting unit operable to select quantized coefficients belonging to a subset of a block from the block of frequency coefficients which are either the coefficients prior to quantization or the quantized coefficients; and
an altering unit operable to alter an arrangement of the subset in the block.

16. A moving picture decoding apparatus comprising:
a decoding unit operable to decode variable-length codes into quantized coefficients and arrangement data for identifying an arrangement of a subset in a block;
an arranging unit operable to arrange the decoded quantized coefficients in the subset in the block based on the arrangement data, and to arrange predetermined values outside the subset in the block based on the arrangement data as quantized coefficients;
an inverse quantization unit operable to inversely quantize the block in which the decoded quantized coefficients and predetermined values are arranged; and
an orthogonal transform unit operable to orthogonally transform the inversely quantized block.

17. A semiconductor apparatus which orthogonally transforms pixels constituting a block into coefficients indicating frequencies, quantizes the coefficients, and encodes the quantized coefficients, said apparatus comprising:
a selecting unit operable to select quantized coefficients belonging to a subset of a block from the block of frequency coefficients which are either the coefficients prior to quantization or the quantized coefficients; and
an altering unit operable to alter an arrangement of the subset in the block.

18. A semiconductor apparatus comprising:
a decoding unit operable to decode variable-length codes into quantized coefficients and arrangement data for identifying an arrangement of a subset in a block;
an arranging unit operable to arrange the decoded quantized coefficients in the subset in the block based on the arrangement data, and to arrange predetermined values outside the subset in the block as quantized coefficients;
an inverse quantization unit operable to inversely quantize the block including the decoded quantized coefficients and predetermined values; and
an orthogonal transform unit operable to orthogonally transform the inversely quantized block.

19. A computer-readable program for orthogonally transforming pixels which constitute a block into coefficients indicating frequencies, quantizing the coefficients, and encoding the quantized coefficients, said program causing a computer to execute:
selecting quantized coefficients belonging to a subset of a block from the block of frequency coefficients which are either the coefficients prior to quantization or the quantized coefficients; and
altering an arrangement of the subset in the block.

20. A computer-readable program for causing a computer to execute:
decoding variable-length codes into quantized coefficients and arrangement data for identifying an arrangement of a subset in a block;
arranging the decoded quantized coefficients in the subset in the block based on the arrangement data;
arranging predetermined values outside the subset in the block based on the arrangement data;
performing an inverse quantization on the block in which the decoded quantized coefficients and the predetermined values are arranged; and
performing an inverse orthogonal transform on the inversely quantized block.
